# FASCICULE DE BREVET EUROPEEN

(11) **EP 1 442 238 B1**
(45) Date de publication et mention de la délivrance du brevet: **04.05.2005**
(21) Numéro de dépôt: 02793204.5
(22) Date de dépôt: 31.10.2002
(51) Int. Cl.: F16H 57/04

(54) **INSTALLATION DE LUBRIFICATION POUR BOITE DE TRANSMISSION DE PUISSANCE BASCULANTE**
SCHMIERMITTELSYSTEM FÜR EIN SCHWENKBARES GETRIEBE
LUBRICATING INSTALLATION FOR ROCKING POWER TRANSMISSION BOX

(30) Priorité: 07.11.2001 FR 0114392
(43) Date de publication de la demande: 04.08.2004
(73) Titulaire: EUROCOPTER, 13725 Marignane Cédex (FR); Fiatavio S.p.A., 1389 10127 Torino (IT)
(72) Inventeur: SANDRART, Thierry, F-13880 Velaux (FR); THOMASSEY, Lionel, F-13270 Fos sur Mer (FR); ORSINI, Giacomo, I-15073 Castellazo Bormida (IT)
(74) Mandataire: Renaud-Goud, Thierry
(86) Numéro de dépôt international: PCT/FR2002/003757
(87) Numéro de publication internationale: WO 2003/040593

(56) Documents cités:
- EP-A- 0 424 341
- DE-A- 2 411 693
- FR-A- 1 544 378
- FR-A- 2 791 634
- US-A- 2 273 129
- US-A- 2 702 168
- US-A- 2 731 282

## Description

L'invention concerne une installation de lubrification pour une boîte de transmission de puissance basculante, du type généralement destiné à entraîner en rotation au moins un organe mené autour d'un axe de rotation devant lui-même pouvoir pivoter, pendant la rotation de l'organe mené, autour d'un axe de basculement, sensiblement perpendiculaire à l'axe de rotation de l'organe mené, la boîte de transmission comprenant un carter monté basculant autour de l'axe de basculement sur un support rigide non basculant.

La boîte de transmission basculante peut être utilisée, de manière non limitative, comme boîte de transmission de puissance équipant des aéronefs dont le système de propulsion est orientable, tels que ballons dirigeables ou aéronefs du type dit convertible, auquel cas l'entraînement en rotation de l'organe mené par la transmission est assuré à partir d'au moins une source de puissance en rotation, ou encore comme boîte de transmission de puissance équipant des éoliennes, auquel cas l'organe mené est un rotor entraîné en rotation par le vent, et est en fait menant pour la transmission qui entraîne un récepteur, par exemple un alternateur.

D'une manière générale, la boîte de transmission de puissance basculante lubrifiée par l'installation selon l'invention est utilisable dans tous les systèmes orientables de propulsion ou de génération d'énergie par rotation qui nécessitent, pour leur bon fonctionnement, une lubrification efficace d'organes de transmission qui sont logés dans le carter basculant, tels que des pignons, paliers, roulements et/ou cannelures d'entraînement.

En particulier, à titre d'application pour laquelle une boîte de transmission de puissance basculante équipée d'une installation de lubrification selon l'invention présente un grand intérêt pour les Demanderesses, une telle boîte de transmission peut être utilisée pour l'entraînement en rotation, à partir d'au moins un groupe motopropulseur, par exemple du type turbomoteur, d'au moins un rotor basculant d'un aéronef du type dit convertible, pouvant opérer en mode avion ou en mode hélicoptère, et dont l'arbre d'entraînement du rotor pivote autour d'un axe de basculement, de sorte à pouvoir passer d'une position, dans laquelle le rotor fonctionne comme une hélice d'avion, pour le vol en mode avion de l'aéronef, à une position dans laquelle le rotor fonctionne comme un rotor sustentateur d'hélicoptère, pour le mode en vol hélicoptère de l'aéronef.

Une installation de lubrification pour une boîte de transmission de puissance basculante selon le préambule de la revendication 1 est décrite dans le document US 2 702 168.

Une boîte de transmission de puissance basculante pour un tel aéronef convertible à rotors basculants selon le préambule de la revendication 16 est décrite notamment dans FR 2 791 319 et FR 2 791 634, auxquels on se reportera pour davantage de précisions à ce sujet.

On rappelle cependant que ces deux brevets décrivent un aéronef convertible à rotors basculants, du type dans lequel l'arbre de chaque rotor est entraîné en rotation sur lui-même par un ensemble réducteur avant de l'une respectivement de deux transmissions de puissance comportant chacune également un ensemble réducteur arrière, relié à l'ensemble réducteur avant correspondant, ainsi qu'à l'un respectivement de deux moteurs (turbomoteurs), supportés chacun par l'une respectivement des deux ailes fixes de l'aéronef, et à un arbre d'interconnexion reliant les deux transmissions pour l'entraînement en rotation des deux rotors par l'un quelconque des deux moteurs, en cas de défaillance de l'autre moteur.

L'arbre de chaque rotor, la transmission de puissance correspondante et le moteur correspondant sont logés dans l'une respectivement de deux nacelles articulées, comportant chacune une partie avant montée basculante, autour de l'axe de basculement, sur une partie arrière fixe par rapport à l'aéronef, et fixée à l'une respectivement des deux ailes de l'aéronef, et dans laquelle sont logés le moteur correspondant et au moins en partie l'ensemble réducteur arrière de la transmission correspondante, dont l'ensemble réducteur avant, réalisé comme une boîte de transmission principale d'hélicoptère, ainsi que l'arbre du rotor correspondant sont logés dans la partie avant basculante de nacelle, et sont montés basculants avec cette partie avant par rapport à la partie arrière fixe de nacelle et l'aile fixe correspondante.

Dans cette application, et avec cette architecture de chaque transmission de puissance, il est essentiel que de nombreux organes de l'ensemble réducteur avant, logés dans le carter basculant, soient en permanence convenablement lubrifiés, lorsque le rotor tourne, pour assurer la sécurité du vol de l'aéronef.

Le but de l'invention est de proposer une installation de lubrification selon le préambule de la revendication 1 pour une telle boîte de transmission de puissance basculante, et un aéronef convertible selon le préambule de la revendication 16, satisfaisant aux exigences précitées et permettant simultanément de faire passer dans un volume restreint une quantité suffisante d'un lubrifiant liquide circulant du support rigide non basculant vers le carter basculant, et, en retour, de ce dernier vers le support rigide, par des canaux qui s'intègrent avantageusement aux moyens de montage pivotant du carter basculant sur le support rigide non basculant, tout en permettant une surveillance de toute fuite de lubrifiant au niveau de l'interface entre le support rigide et le carter basculant, et une maintenance relativement aisée de l'installation.

A cet effet, l'installation de lubrification selon l'invention, pour une boîte de transmission de puissance basculante du type présenté ci-dessus, se caractérise en ce qu'elle comprend au moins un circuit de lubrification sous pression d'au moins un organe à lubrifier, tel que pignon, palier, roulement et/ou cannelures, logé dans le carter basculant, ledit circuit de lubrification comportant un palier de transfert radial de lubrifiant liquide sous pression, entre deux portées cylindriques en vis-à-vis, sensiblement coaxiales autour de l'axe de basculement, et dont l'une est une portée fixe, ménagée sur une partie fixe solidaire dudit support non basculant, et l'autre est une portée pivotante, ménagée sur une partie pivotante solidaire du carter pivotant, ledit palier de transfert radial comportant deux joints d'étanchéité annulaires de section transversale en U couché, à concavité de chacun tournée vers l'autre et espacés l'un de l'autre selon l'axe de basculement, de sorte à délimiter entre les deux joints et les deux portées une chambre annulaire de lubrifiant liquide sous pression, dont la pression applique chacune des deux lèvres latérales de chaque joint d'étanchéité radialement vers l'intérieur ou l'extérieur contre l'une respectivement des deux portées, ladite chambre annulaire, d'une part, étant alimentée en lubrifiant liquide sous pression par un orifice d'entrée, débouchant dans la portée fixe entre les deux joints d'étanchéité, et à l'extrémité aval d'au moins un conduit d'alimentation intégré dans ladite partie fixe et dont l'extrémité amont est reliée à au moins une source de lubrifiant pressurisé, et, d'autre part, alimentant le carter basculant en lubrifiant liquide sous pression par un orifice de sortie, débouchant dans la portée pivotante entre les deux joints d'étanchéité, et à l'extrémité amont d'au moins une conduite de distribution s'étendant dans la partie pivotante et débouchant dans le carter basculant.

Cette réalisation a pour avantages de comporter, pour chaque circuit de lubrification, un palier de transfert radial auto-étanche, puisque la pression du lubrifiant liquide dans la chambre annulaire entre les deux joints d'étanchéité en U correspondant assure l'étanchéité radiale par l'application des lèvres latérales des joints contre les deux portées cylindriques en vis-à-vis, et de permettre l'intégration d'un tel palier de transfert radial entre une partie fixe et une partie pivotante qui peuvent être celles au niveau desquelles est aménagé l'un des deux paliers par lesquels le carter basculant est monté pivotant sur le support fixe, ou entre des parties fixe et pivotante dont l'une au moins est directement solidaire de l'une respectivement d'une partie fixe et d'une partie pivotante au niveau desquelles est aménagé ce palier de pivotement.

Avantageusement, pour assurer un bon débit de transfert du lubrifiant sur toute la plage angulaire de pivotement du carter basculant par rapport au support fixe, l'un au moins des orifices d'entrée et de sortie débouche dans une lumière en arc-de-cercle, centrée sur l'axe de basculement, ménagée entre les deux joints d'étanchéité dans la portée fixe ou pivotante correspondante, et sous-tendue par un angle au centre correspondant sensiblement à l'angle de pivotement dudit carter basculant. De plus, pour éviter toute augmentation du volume de la chambre annulaire du palier de transfert facial, ce qui serait préjudiciable à son bon fonctionnement, chacun des deux joints d'étanchéité du palier de transfert radial est retenu axialement entre les deux portées et contre la pression dans ladite chambre annulaire par un épaulement radial ménagé sur l'une des deux portées ou par une bague épaulée fixée à l'une des deux portées, de préférence à la portée fixe.

Avantageusement de plus, pour le recyclage du lubrifiant liquide utilisé dans le carter basculant, l'installation comprend également un circuit de vidange, assurant le retour du lubrifiant liquide du carter basculant dans la pièce fixe par un palier de transfert facial du lubrifiant liquide entre deux faces radiales, par rapport à l'axe de basculement, en vis-à-vis et dont l'une est une face pivotante ménagée sur la partie pivotante et l'autre est une face fixe, ménagée sur ladite partie fixe, au moins un canal de vidange, ménagé dans ladite partie pivotante, débouchant dans une lumière faciale en arc-de-cercle centrée sur l'axe de basculement et ménagée dans ladite face radiale pivotante, en regard d'un orifice de vidange débouchant dans ladite face radiale fixe, et à l'extrémité amont d'un conduit de retour intégré dans ladite partie fixe, pour conduire le lubrifiant liquide dans un réservoir, qui peut ainsi être solidaire du support non basculant, et dans lequel du lubrifiant liquide peut être prélevé pour être renvoyé dans au moins un circuit de lubrification de l'installation, vers le carter basculant.

Afin d'assurer une bonne étanchéité radiale au palier de transfert facial du circuit de vidange, la lumière faciale correspondante s'étend avantageusement dans ladite face radiale pivotante entre deux autres joints d'étanchéité annulaires, sensiblement coaxiaux autour dudit axe de basculement et situés radialement l'un à l'extérieur et l'autre à l'intérieur de ladite lumière faciale, chacun des deux autres joints d'étanchéité ayant une section transversale en U couché à concavité tournée vers ladite pièce fixe, et étant monté entre deux portées cylindriques sensiblement coaxiales autour de l'axe de basculement et dont l'une est une portée pivotante ménagée sur ladite pièce pivotante, et l'autre une portée fixe ménagée sur ladite pièce fixe, de sorte que chaque autre joint d'étanchéité délimite avec ladite pièce fixe une chambre annulaire d'étanchéité radiale en communication, entre les deux faces radiales, avec la lumière faciale et l'orifice de vidange, et remplie de lubrifiant liquide appliquant chacune des deux lèvres latérales dudit autre joint d'étanchéité radialement vers l'extérieur ou l'intérieur contre l'une respectivement desdites portées cylindriques pivotante ou fixe.

L'installation peut alors avantageusement comporter au moins un détecteur de fuite, sensible à une présence de lubrifiant liquide dans un volume délimité entre un joint d'étanchéité associé au palier de transfert facial du circuit de vidange et un joint d'étanchéité du palier de transfert radial d'un circuit de lubrification, les deux joints d'étanchéité étant montés entre les mêmes portées cylindriques, le détecteur des fuites éventuelles de ces deux joints d'étanchéité étant notamment un capteur de pression implanté de préférence dans une portion de la portée fixe, entre ces deux joints.

Afin d'assurer une bonne vidange du carter basculant, en particulier dans les deux positions extrêmes de pivotement qu'il peut prendre par rapport au support non pivotant, le circuit de vidange peut comprendre un premier canal de vidange, débouchant en aval dans ladite lumière faciale, et, en amont, dans un fond dudit carter basculant dans lequel le lubrifiant liquide est collecté par gravité dans au moins une première position dudit carter basculant autour de l'axe de basculement, et un deuxième canal de vidange, débouchant dans ladite lumière faciale par son extrémité aval et canalisant du lubrifiant liquide pressurisé par au moins un organe de mise en pression du lubrifiant collecté dans au moins une partie dudit carter basculant, dans au moins une deuxième position du carter basculant autour de l'axe de basculement.

Dans un premier mode de réalisation, l'organe de mise en pression du lubrifiant liquide collecté dans le carter basculant peut être une pompe de vidange, entraînée en rotation dans une partie dudit carter basculant dans laquelle du lubrifiant liquide est collecté dans au moins ladite deuxième position dudit carter basculant autour dudit axe de basculement, ladite pompe de vidange alimentant ledit second canal de vidange.

Mais, selon un autre mode de réalisation, l'organe de mise en pression du lubrifiant liquide peut être une vis d'Archimède, la vis d'Archimède étant entraînée en rotation dans une goulotte s'étendant à l'intérieur et le long d'une paroi dudit carter basculant, ladite goulotte étant percée d'orifices de collecte du lubrifiant liquide à différents niveaux dans ledit carter basculant, dans au moins ladite deuxième position de ce dernier autour de l'axe de basculement, cette vis d'Archimède alimentant le second canal de vidange du circuit de vidange de l'installation propre à l'invention.

En variante, deux pompes de vidange peuvent être entraînées dans le carter basculant, dans lequel ces deux pompes sont disposées de sorte que chacune d'elles pompe du lubrifiant liquide collecté dans l'une respectivement de deux portions du carter basculant, lorsque ce dernier occupe l'une ou l'autre respectivement des deux positions extrêmes de basculement autour de l'axe de basculement.

Afin d'assurer une grande fiabilité, l'installation selon l'invention comprend avantageusement deux circuits de lubrification, dont un circuit principal et un circuit de secours, tels que leurs paliers de transfert radial, sensiblement de même rayon autour de l'axe de basculement, sont décalés l'un par rapport à l'autre selon l'axe de basculement, et en direction circonférentielle autour de l'axe de basculement pour ce qui concerne leurs orifices d'entrée et de sortie et, le cas échéant, leur lumière en arc-de-cercle, et la vidange du lubrifiant liquide est assurée par un circuit de vidange commun aux deux circuits de lubrification.

Avantageusement dans ce cas, l'installation peut comporter de plus au moins un détecteur de fuite, sensible à une présence de lubrifiant liquide dans le volume délimité entre les paliers de transfert radial des deux circuits de lubrification, lorsque ces paliers de transfert radial sont axialement décalés entre les mêmes portées cylindriques fixe et pivotante, ce qui est avantageusement le cas, car permettant d'utiliser les mêmes pièces fixe et pivotante pour les deux circuits de lubrification, et donc aussi l'unique circuit de vidange.

On réalise ainsi une installation de lubrification indépendante en faisant en sorte que le ou les conduits d'alimentation, intégré(s) dans la partie fixe de ou pour chacun des circuits de lubrification, est ou sont alimentés à partir d'un réservoir de lubrifiant liquide dans lequel est immergée au moins une pompe de lubrification pour chaque circuit de lubrification.

Dans l'application préférentielle précitée à la lubrification d'une transmission à deux ensembles réducteurs dont l'un est basculant, pour l'entraînement d'un rotor basculant d'aéronef convertible, il est avantageux que chaque pompe de lubrification soit entraînée par un pignon d'un premier ensemble réducteur logé au moins en partie dans un carter non basculant solidaire dudit support, ledit premier ensemble réducteur étant en prise, par un pignon monté en rotation autour dudit axe de basculement, avec un second ensemble réducteur logé dans ledit carter basculant et pivotant avec ce dernier.

Pour assurer une bonne lubrification dans le carter basculant, chaque circuit de lubrification comporte, dans ce dernier, au moins un canal annulaire de distribution, sensiblement centré sur ledit axe de rotation de l'organe mené, et relié à ladite chambre annulaire du palier de transfert radial correspondant par ladite conduite de distribution.

Ce canal annulaire de distribution est avantageusement ménagé dans un diaphragme sensiblement transversal audit carter basculant et supportant au moins un roulement de guidage d'au moins un arbre d'au moins un pignon du second ensemble réducteur et/ou dudit organe mené en rotation, chaque canal annulaire de distribution alimentant en lubrifiant liquide des conduites de lubrification se terminant par des jets de lubrifiant orientés vers des organes à lubrifier dans ledit carter basculant.

L'invention concerne également un aéronef convertible, comprenant au moins un rotor basculant destiné à être entraîné en rotation autour d'un axe de rotation, devant lui-même pivoter autour d'un axe de basculement, par au moins une boîte de transmission de puissance basculante, comprenant un carter monté basculant autour dudit axe de basculement, qui est sensiblement perpendiculaire audit axe de rotation, sur au moins un support rigide non-basculant solidaire de la structure dudit aéronef, ledit carter logeant au moins un organe à lubrifier, tel que pignons, paliers, roulements et/ou cannelures, l'aéronef étant caractérisé en ce qu'il comporte au moins une installation de lubrification de ladite au moins une boîte de transmission de puissance basculante, et en ce que ladite installation de lubrification est une installation selon l'invention, telle que définie ci-dessus.

D'autres avantages et caractéristiques de l'invention ressortiront de la description donnée ci-dessous, à titre non limitatif, d'un exemple de réalisation décrit en référence aux dessins annexés sur lesquels :
- la figure 1 illustre schématiquement une transmission de puissance avec carter basculant et installation de lubrification associée, pour un rotor basculant d'aéronef convertible,
- les figures 2 et 3 sont des vues schématiques en perspective de la transmission représentée sans carter,
- les figures 4 et 5 sont des vues en perspective de la transmission représentée avec le carter basculant respectivement en mode hélicoptère et en mode avion,
- les figures 6 et 7 sont des vues en perspective de la transmission des figures 4 et 5 sans la partie supérieure du carter en mode hélicoptère, et le mât rotor ainsi que certains éléments de transmission qui y sont logés,
- la figure 8 est une vue schématique, en coupe par l'axe de basculement, dans la zone d'un palier de pivotement du carter et des circuits de lubrification et de vidange de l'installation de la figure 1,
- la figure 9 est une vue à plus grande échelle d'un détail de la figure 8 au niveau d'un palier de pivotement du carter et des paliers de transfert radial des circuits de lubrification,
- les figures 9a et 9b sont des représentations schématiques de variantes de la figure 9 limitées au circuit de lubrification principal respectivement de secours,
- la figure 9c illustre schématiquement un dispositif de surveillance à détection de fuite entre les paliers de transfert radial des deux circuits de lubrification,
- les figures 10 et 11 sont des vues analogues à la figure 9 de détails de la figure 8 au niveau du même palier de pivotement du carter et du palier de transfert facial du circuit de vidange, dans les positions de basculement du carter correspondant aux modes respectivement hélicoptère et avion du rotor entraîné par la transmission,
- la figure 11a est une représentation schématique d'une variante du palier de transfert facial des figures 10 et 11,
- la figure 11b illustre schématiquement un détecteur de fuite du dispositif de surveillance, entre le palier de transfert facial du circuit de vidange et le palier de transfert radial d'un circuit de lubrification,
- les figures 12 et 13 sont des vues en perspective de la partie fixe dans laquelle sont partiellement aménagés les paliers de transfert radial et facial de l'installation de lubrification, et
- la figure 14 est une vue schématique du carter basculé en mode avion avec une vis d'Archimède du circuit de vidange de l'installation de lubrification.

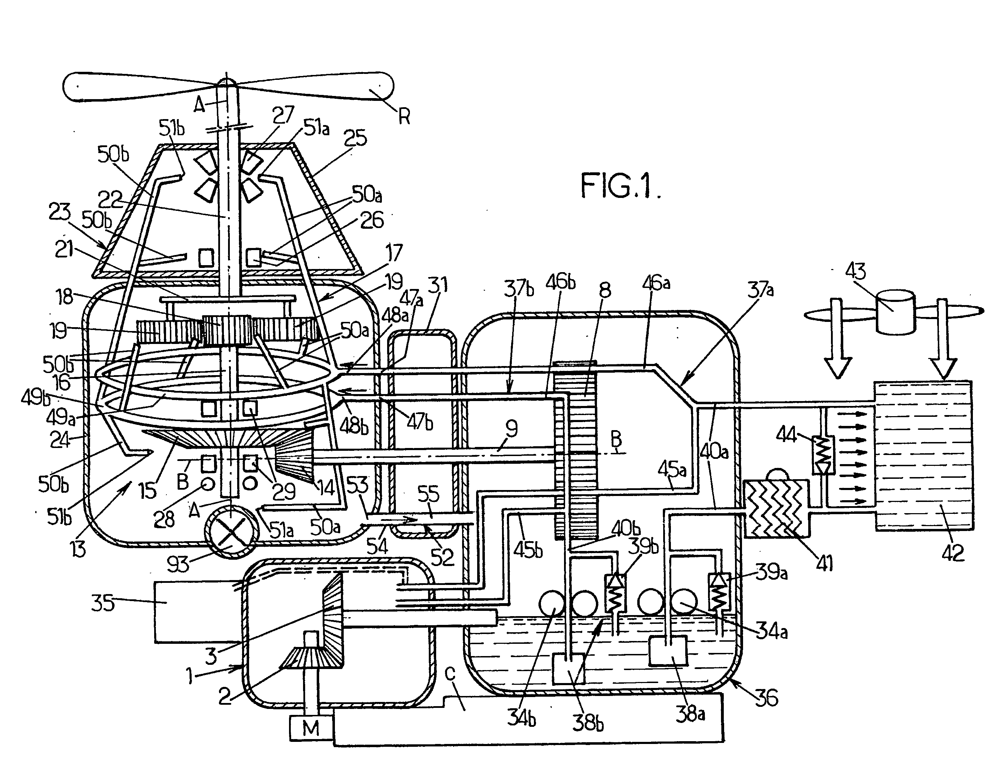

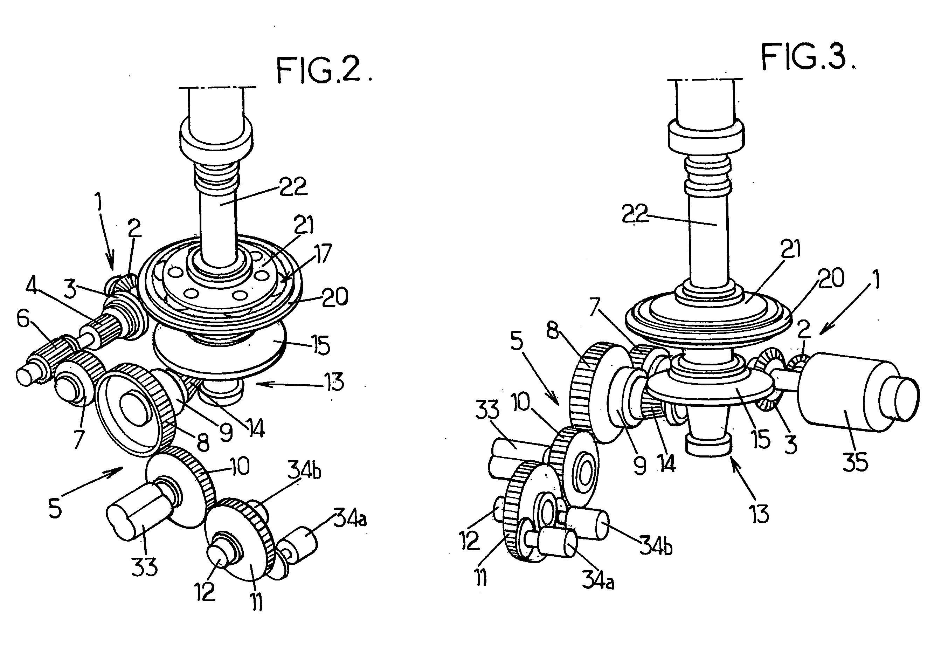

Sur les figures 1 à 7, la transmission pour l'entraînement en rotation d'un rotor R (figure 1) autour de son axe de rotation A-A, à partir d'un turbomoteur M (figure 1), fixe par rapport à l'aéronef convertible, schématisé en C sur la figure 1, équipé du rotor basculant R pouvant basculer autour d'un axe de basculement B-B perpendiculaire à l'axe A-A, comprend un module fixe d'entrée 1 à couple conique ou spiroconique, dont le pignon conique d'entrée 2 est relié à un arbre de sortie du moteur M, et dont la roue conique dentée de sortie 3 est reliée, par son arbre, et par l'intermédiaire d'une roue libre 4 (figure 2) à un module latéral fixe 5 comportant un train de pignons cylindriques représenté sur les figures 2 et 3.

En aval de l'étage réducteur à haute vitesse du module d'entrée 1, le module latéral 5 comprend un premier étage réducteur intermédiaire constitué d'un pignon 6, entraîné par l'arbre de sortie de la roue libre 4, et en prise avec un pignon 7 lui-même en prise, dans un second étage réducteur intermédiaire, avec un pignon 8 dit « de basculement », car entraîné en rotation avec son arbre 9 autour de l'axe de basculement B-B d'un ensemble réducteur basculant de la transmission décrit ci-après.

Le pignon de basculement 8 est également en prise avec un pignon intermédiaire 10 en prise lui-même avec un pignon 11 d'interconnexion avec l'arbre d'interconnexion, partiellement représenté en 12, pour l'entraînement en rotation d'un autre rotor à partir du moteur M, lorsque le moteur d'entraînement de l'autre rotor est en panne, ou pour l'entraînement du rotor R à partir du moteur d'entraînement de l'autre rotor, lorsque le moteur M est en panne.

Le train de pignons cylindriques 6, 7, 8, 10 et 11 du module latéral 5 constitue un train d'engrenage latéral, par rapport à l'arbre de sortie du moteur M, et ce module latéral 5 constitue avec le module d'entrée 1 un ensemble réducteur non-basculant de la transmission, agencé en boîte de transmission intermédiaire, relié par l'arbre 9 du pignon de basculement 8 à un ensemble réducteur basculant de la transmission, à présent décrit.

Cet ensemble réducteur basculant, agencé comme une boîte de transmission principale d'hélicoptère, comporte un module principal 13 constitué d'un étage réducteur d'entrée, du type à couple conique ou spiroconique, dont un pignon conique d'entrée 14 est coaxial au pignon cylindrique de basculement 8 et solidaire en rotation de ce pignon de basculement, dans au moins un sens de rotation, autour de l'axe de basculement B-B. Le module principal 13 est donc un module de basculement à couple conique ou spiroconique, comportant également une roue conique dentée de sortie 15, en prise avec le pignon conique 14, et dont l'arbre 16 est guidé en rotation autour de l'axe A-A de rotation du rotor R, et solidaire en rotation d'un pignon planétaire 18, d'un étage réducteur de sortie de type épicycloïdal ou module épicycloïdal 17, dont le pignon planétaire 18 est en prise avec des pignons satellites 19, également en prise avec une couronne dentée périphérique externe 20, retenue en rotation dans le fond d'un carter basculant, comme expliqué ci-dessous, les pignons satellites 19 étant montés en rotation chacun autour de son axe, sur des arbres d'un porte-satellites 21 solidaire en rotation coaxiale du mât 22 du rotor R autour de l'axe de rotation A-A.

L'ensemble réducteur avant basculant, constitué des modules principal 13 et épicycloïdal 17, est logé dans un carter basculant 23, constitué d'un fond de carter 24 assemblé à un haut de carter 25 de forme profilée convergent vers le rotor R.

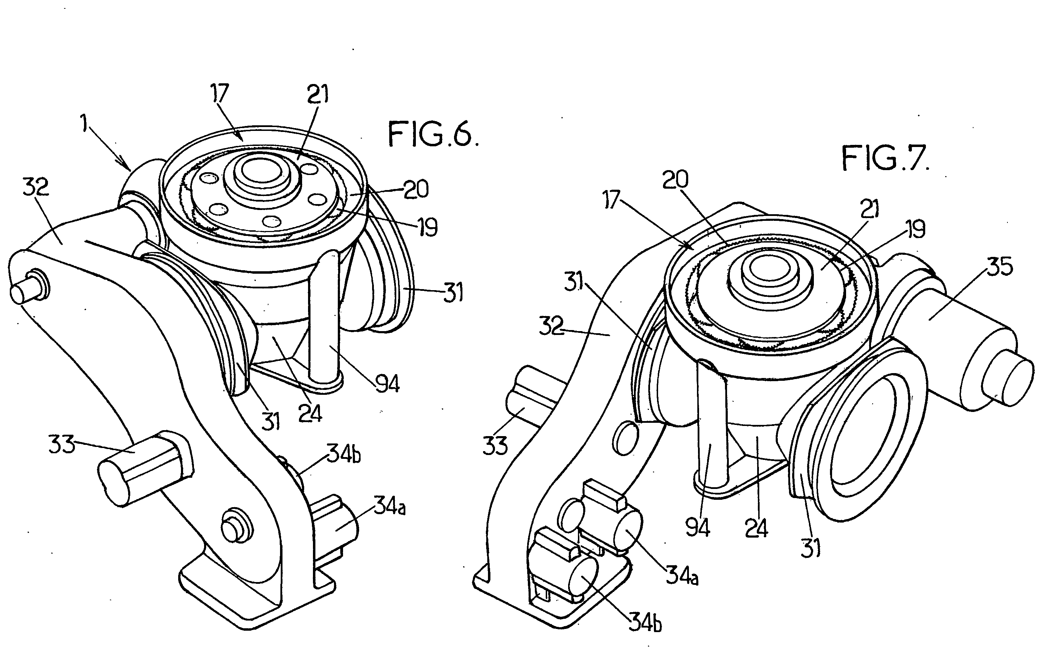

La base du mât rotor 22 est montée et guidée en rotation dans le haut de carter 25 par un roulement à rouleaux 26 et un roulement 27 à double rangée de rouleaux coniques, et est entraînée en rotation par des cannelures axiales en prise avec des cannelures axiales dans un alésage central du porte-satellites 21 qui, comme représenté sur les figures 6 et 7, est logé et monté en rotation avec le reste de la boîte de transmission de puissance basculante 13-17, dans le fond de carter 24, dans lequel l'arbre 16 commun au pignon planétaire 18 et à la roue conique 15 est monté et guidé en rotation par un roulement à billes 28 et deux roulements à rouleaux 29 (figure 1).

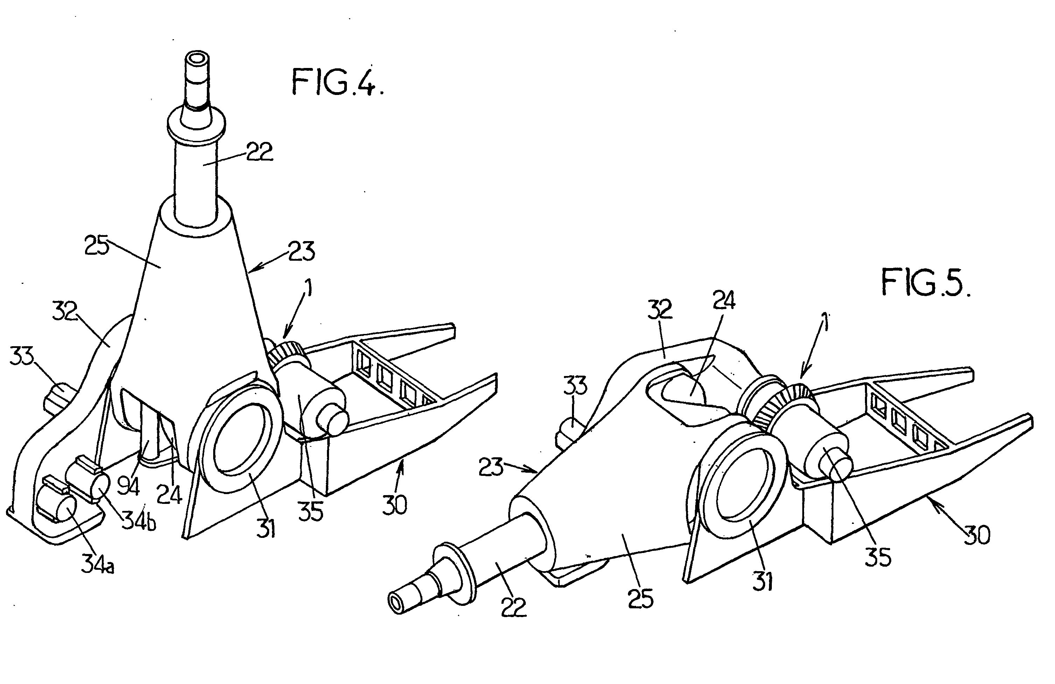

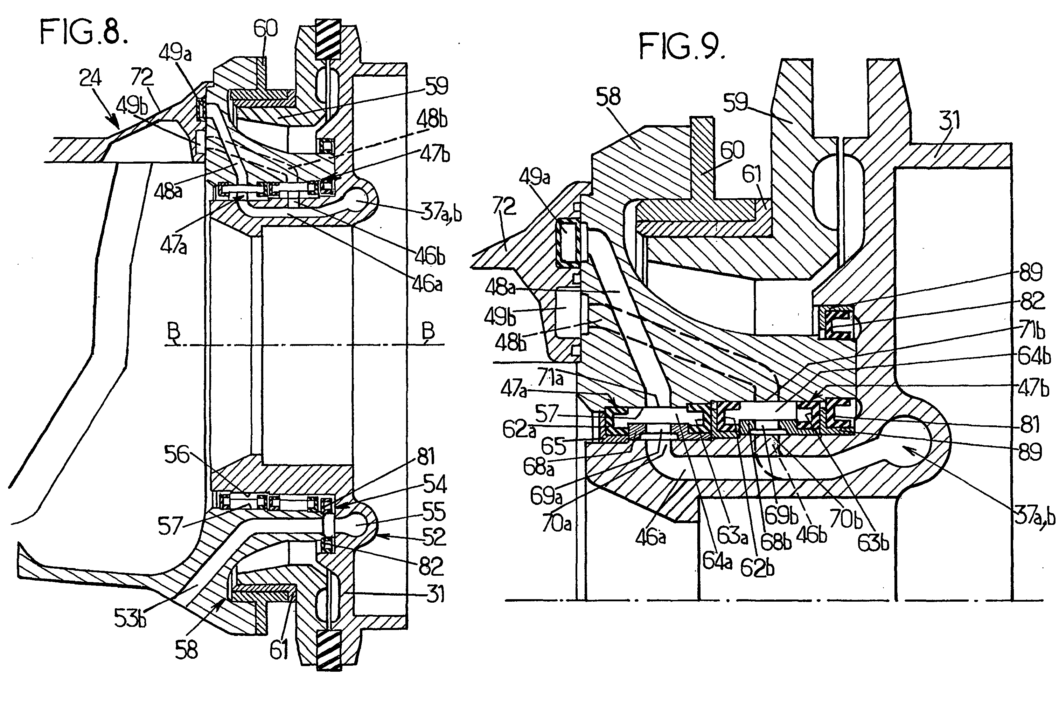

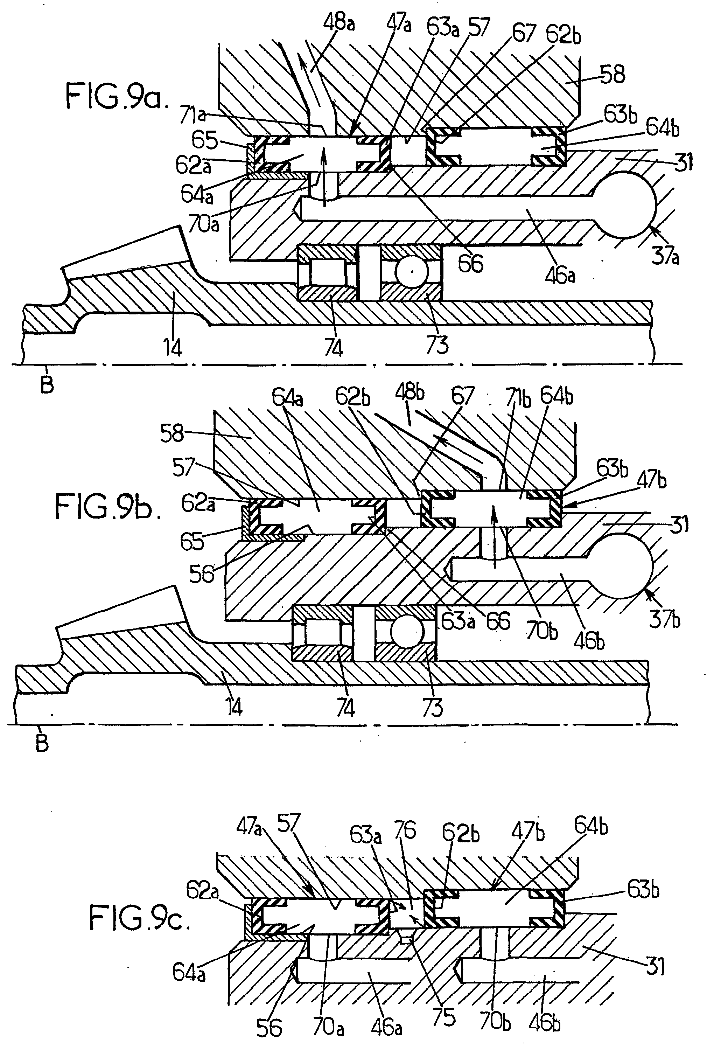

Le carter basculant 23 est monté pivotant par son fond de carter 24, autour de l'axe de basculement B-B (axe du pignon conique 14, du pignon de basculement 8 et de son arbre 9) sur un support rigide non-basculant 30 (figures 4 et 5), fixé à la structure de la partie arrière d'une nacelle motrice correspondante et à la structure d'une aile fixe de l'aéronef convertible, comme décrit dans les brevets précités. Ce montage pivotant du carter 23 sur le support 30 est assuré par le montage tourillonnant du fond de carter 24 entre deux pièces fixes de pivot 31, solidarisées au support 30, par deux paliers lisses dont l'un est décrit ci-dessous en référence aux figures 8 et 9.

Les pignons du module latéral 5 de l'ensemble réducteur non-basculant sont logés dans un carter non-basculant latéral 32, également solidaire de la pièce fixe 31 et du support rigide 30, et représenté sur les figures 6 et 7, montrant également la disposition de certains éléments du module épicycloïdal 17 dans le fond de carter 24, dans lequel est en particulier retenue la couronne dentée externe 20.

Par simplification, le carter non-basculant 32 du module latéral 5 n'est pas représenté sur la figure 1, sur laquelle seuls le pignon de basculement 8 et son arbre 9, appartenant à ce module, sont présentés schématiquement, ainsi que la pièce fixe 31 traversée par cet arbre 9, au niveau du palier de pivotement correspondant. A noter que le carter latéral non-basculant 32 supporte également des accessoires entraînés par des pignons du module latéral 5, en particulier une pompe hydraulique 33 entraînée par le pignon intermédiaire 10, et deux pompes de lubrification 34a et 34b appartenant à l'installation de lubrification décrite ci-dessous, et entraînées à partir du pignon d'interconnexion 11 tandis que le pignon intermédiaire 7 entraîne l'arbre d'un ventilateur de refroidissement d'un échangeur thermique de l'installation de lubrification, et qu'un alternateur 35 est entraîné par l'arbre de la roue conique 3 du module d'entrée 1.

Cette installation de lubrification sous pression, à présent décrite en référence aux figures 1 et 8 à 14, est nécessaire pour lubrifier des organes de la boîte de transmission de puissance basculante 13-17 logés dans le carter basculant 23, et en particulier les pignons et roues dentées du module de base 13 et du module épicycloïdal 17 ainsi que leurs paliers et roulements 26 à 29, et les cannelures d'entraînement du mât rotor 22 par le porte-satellites 21.

Cette installation de lubrification, schématiquement représentée sur la figure 1, comprend un réservoir latéral 36 de lubrifiant liquide, solidaire du support 30 et du carter latéral non-basculant 32, et dans lequel sont logées les deux pompes de lubrification 34a et 34b, dont l'une 34a (figure 1) est celle d'un circuit principal de lubrification 37a, tandis que l'autre pompe de lubrification 34b est celle d'un circuit de lubrification de secours 37b. Chaque pompe de lubrification 34a, 34b est par exemple du type à engrenage pompant du lubrifiant liquide dans le fond du réservoir 36, au travers d'un filtre 38a ou 38b, en étant bi-passée par une vanne de surpression 39a ou 39b, pour alimenter un conduit 40a ou 40b. Le conduit 40a d'alimentation du circuit principal 37a débouche dans un filtre 41 à l'entrée d'un échangeur thermique 42 balayé par un courant d'air déplacé par un ventilateur 43, entraîné en rotation par le pignon intermédiaire 7 du module latéral 5, pour refroidir le lubrifiant liquide du circuit principal 37a. L'entrée de l'échangeur 42 est reliée à sa sortie par une conduite de dérivation équipée d'une vanne tarée 44, pour le démarrage à froid de l'installation, et le conduit principal 40a se divise, après la sortie de l'échangeur thermique 42, en deux branches, dont l'une est un conduit 45a de lubrification de l'alternateur 35, et l'autre un conduit 46a qui est au moins partiellement intégré dans la partie fixe 31 solidaire du support 30, et alimente un palier 47a de transfert de lubrifiant liquide sous pression de la partie fixe 31 à l'intérieur du carter basculant 23.

Le conduit d'alimentation 40b du circuit de secours 37b ne passe pas par le filtre 41 et l'échangeur de chaleur 42, et se subdivise également en deux branches, dont un conduit 45b de lubrification en secours de l'alternateur 35, et un conduit 46b partiellement intégré dans la pièce fixe 31 et alimentant un deuxième palier 47b de transfert de lubrifiant liquide sous pression de la partie fixe de l'installation vers l'intérieur du carter basculant 23.

Au-delà du palier de transfert 47a ou 47b, le circuit de lubrification principal 37a ou de secours 37b se prolonge par une conduite de distribution 48a ou 48b débouchant, à l'intérieur du carter basculant 23, dans un canal annulaire de distribution 49a ou 49b, entourant l'arbre 16 et sensiblement centré sur l'axe de rotation A-A du mât rotor 22, chaque canal annulaire de distribution 49a et 49b alimentant en lubrifiant liquide des conduites de lubrification principales 50a ou de secours 50b se terminant par des jets de lubrifiant principaux 51a ou de secours 51 b qui sont dirigés vers les organes à lubrifier tels que les roues dentées et pignons du module de base 13 et du module épicycloïdal 17, ainsi que vers les roulements 26 à 29.

A noter que le canal de distribution 49b du circuit de secours 37b alimente un nombre de conduites de lubrification 50b, et donc de jets de lubrification de secours 51 b, plus faible que le nombre des conduites de lubrification 50a et jets de lubrification 51 a du circuit principal 37a, car le circuit de secours 37b, dont le lubrifiant liquide n'est pas refroidi dans l'échangeur thermique 42, n'assure la lubrification en secours que des points critiques dans le carter basculant 23, en cas de défaillance du circuit principal 37a. Les deux circuits principal 37a et de secours 37b fonctionnent normalement en permanence, leurs pompes de lubrification 34a et 34b étant normalement entraînées en permanence.

Après sa projection par les jets 51a et/ou 51 b, le lubrifiant liquide s'écoule par gravité, notamment le long des parois internes du carter 23, et se collecte dans la partie basse du carter 23, qui est le fond de carter 24 lorsque le carter 23, et donc la boîte de transmission de puissance basculante, est en mode hélicoptère, ou qui est la partie la plus basse du fond de carter 24 et du haut de carter 25 lorsque l'ensemble du carter 23 est basculé en mode avion (figure 5), auquel cas le lubrifiant liquide est collecté et pressurisé par une pompe ou vis d'Archimède, comme décrit ci-dessous, pour être conduit sous pression dans une partie du fond de carter 24, au niveau d'un canal de vidange 53 d'un unique circuit de vidange 52, assurant le retour du lubrifiant liquide du carter basculant 23 vers le réservoir 36, au travers de la partie fixe 31, grâce à un palier de transfert 54, entre le carter 23 et la partie fixe 31, qui est en communication avec une conduite de retour 55 intégrée dans la partie fixe 31 et débouchant dans le réservoir 36.

Les paliers de transfert 47a et 47b des circuits de lubrification principal 37a et de secours 37b ont la même structure et sont agencés entre des portions en regard de deux portées cylindriques 56 et 57, coaxiales autour de l'axe de basculement B-B et en vis-à-vis, dont l'une 56 est une portée fixe aménagée sur la partie fixe 31 et tournée radialement vers l'extérieur, en étant positionnée radialement à l'intérieur de l'autre portée cylindrique 57, définie par un alésage dans une partie pivotante 58 qui est solidaire en rotation du carter basculant 23. La partie fixe 31 et la partie pivotante 58 sont respectivement solidaires d'un manchon 59 et d'un tourillon 60 (voir figures 8 et 9) qui sont cylindriques de section circulaire, coaxiaux autour de l'axe de basculement B-B, radialement à l'extérieur des paliers de transfert 47a et 47b, et tels que le tourillon 60 est emmanché à pivotement autour du manchon 59 avec interposition d'une bague épaulée d'usure 61 pour former l'un des deux paliers lisses de pivot du carter basculant 23 sur le support 30, l'autre palier lisse étant symétrique, par rapport à l'axe de rotation A-A, de celui 59-60-61 venant d'être décrit.

Chaque palier de transfert 47a ou 47b de lubrifiant sous pression comprend deux joints d'étanchéité 62a et 63a, ou 62b et 63b (voir figures 9, 9a, 9b, 9c) qui sont annulaires et chacun de section transversale en U couché, et disposés entre les portées 56 et 57 de sorte que chacun des deux joints d'un même palier 47a ou 47b est ouvert vers l'autre joint, c'est-à-dire que la concavité de chacun des joints 62a, 63a ou 62b, 63b de chaque palier de transfert 47a ou 47b est tournée vers l'autre joint du même palier. Les deux joints 62a, 63a ou 62b, 63b sont espacés l'un de l'autre dans la direction de l'axe de basculement B-B, et délimitent entre eux et entre les portées 56 et 57 une chambre annulaire 64a ou 64b de lubrifiant liquide sous pression, dont la pression a pour effet d'appliquer chacune des deux lèvres latérales de chaque joint d'étanchéité 62a, 63a, ou 62b, 63b, radialement vers l'intérieur ou vers l'extérieur, c'est-à-dire vers la portée 56 ou vers la portée 57, et contre la portée correspondante ou, éventuellement, tout organe garnissant cette portée 56 ou 57.

Un tel organe peut être une bague épaulée telle que 65 (voir figures 9, 9a et 9b), qui est fixée à l'une des deux portées 56 et 57, par exemple à la portée fixe 56, afin de retenir axialement un joint, tel que 62a, contre la pression dans la chambre annulaire correspondante, telle que 64a, qui tend à écarter les deux joints tels que 62a et 63a l'un de l'autre, l'autre joint tel que 63a du même palier de transfert tel que 47a étant également retenu axialement, soit par une autre bague épaulée, soit par au moins un épaulement radial tel que 66 ou 67, aménagé sur l'une des portées 56 et 57, comme représenté sur les figures 9a et 9b par exemple.

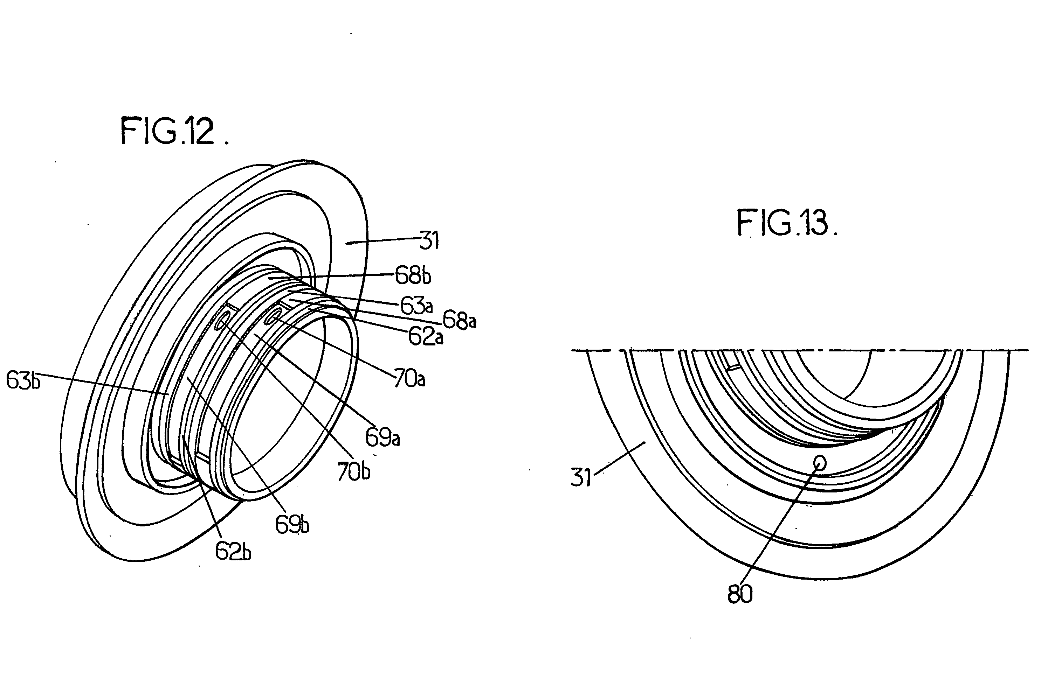

Un autre organe pouvant garnir l'une des portées 56 et 57, et contre lequel l'une des lèvres latérales d'un joint d'étanchéité peut être appliquée de manière étanche par la pression régnant dans la chambre annulaire 64a, 64b correspondante, est une bague telle que 68a ou 68b, sur la figure 9, entourant la portion de la portée fixe 56 qui s'étend entre les deux joints d'étanchéité 62a et 63a ou 62b et 63b, et dans laquelle a été usinée une lumière 69a ou 69b en arc-de-cercle, centrée sur l'axe de basculement B-B et sous-tendue par un arc au centre d'environ 110° correspondant sensiblement à l'angle maximum de pivotement du carter basculant 23 sur le support non-basculant 30. Dans chacune de ces lumières 69a et 69b, qui sont décalées l'une par rapport à l'autre non seulement selon l'axe de basculement B-B, mais aussi en direction circonférentielle autour de l'axe de basculement B-B, comme représenté sur la figure 12, débouche un orifice d'entrée 70a ou 70b, percé dans la portée fixe 56 entre les deux joints 52a, 53a ou 52b, 53b, et par lequel la lumière 69a ou 69b et la chambre annulaire correspondante 64a ou 64b sont alimentées en lubrifiant liquide par l'extrémité aval du conduit d'alimentation 46a ou 46b intégré dans la partie fixe 31.

Chaque chambre annulaire 64a ou 64b, ainsi alimentée en lubrifiant liquide sous pression, alimente à son tour le carter basculant 23 en lubrifiant liquide sous pression par un orifice de sortie 71 a ou 71 b, qui débouche dans la portée pivotante 57, entre les deux joints d'étanchéité 62a, 63a ou 62b, 63b du même palier de transfert 47a ou 47b, et à l'extrémité amont de la conduite de distribution 48a ou 48b correspondante, qui s'étend dans la partie pivotante 58.

A son extrémité aval, cette conduite de distribution 48a ou 48b débouche dans le canal annulaire de distribution correspondant 49a ou 49b, ces deux canaux étant par exemple ménagés dans la base d'un diaphragme 72, sensiblement transversal à l'intérieur du carter basculant 23, et supportant, dans sa partie centrale annulaire, au moins un roulement, tel que l'un des roulements 29 de guidage de l'arbre 16 de la roue conique 15 et du pignon planétaire 18 du second ensemble réducteur 13-17, ou un autre roulement guidant par exemple le mât rotor 22.

Dans les paliers 47a et 47b, qui sont ainsi des paliers de transfert radial, à étanchéité radiale (au niveau des lèvres latérales des joints d'étanchéité) du lubrifiant liquide sous pression transféré de la pièce fixe 31 à la pièce pivotante 58 avec le carter basculant 23, des bagues cylindriques présentant des lumières en arc-de-cercle, telles que les bagues 68a, 68b avec lumière 69a, 69b, peuvent être prévues, à la place ou en plus de ces dernières, contre la portée pivotante 57 et tel que l'orifice de sortie 71 a ou 71 b débouche dans leur lumière, laquelle est toujours en regard, quelle que soit la position de basculement du carter basculant 23, d'un orifice d'entrée 70a ou 70b pouvant déboucher directement dans la portée fixe 56. La présence de bagues telles que 68a, 68b avec une lumière en arc-de-cercle telle que 69a ou 69b assure un débit de transfert de lubrifiant sous pression qui est suffisant quelle que soit la position du carter basculant 23.

On note également, comme montré par les figures 9a et 9b, que la partie fixe 31, qui est une pièce annulaire (voir figures 12 et 13) présente un alésage central traversé par le pignon conique d'entrée 14 du module de base 13, lequel pignon 14 est monté et guidé en rotation dans la pièce fixe 31 par des roulements à billes 73 et rouleaux 74.

La figure 9c montre qu'un détecteur de fuite 75, tel qu'un capteur de pression, peut être implanté dans la portion de la portée fixe 56 qui s'étend entre le joint d'étanchéité 63a du palier de transfert 47a et le joint 62b de l'autre palier de transfert 47b, lesquels joints 63a et 62b délimitent avec les portions correspondantes des portées fixe 56 et pivotante 57 un volume 76 dans lequel se collectent les débits de fuite éventuels de ces deux joints 63a et 62b, et auxquels le détecteur de pression 75 est sensible. Ce détecteur 75 peut être intégré dans un circuit de surveillance, et permet de détecter les fuites de lubrifiant liquide sous pression entre les deux joints de transfert radial 47a et 47b, sans cependant pouvoir identifier celui des deux joints d'étanchéité correspondant 63a ou 62b qui fuit, lorsque l'un des deux est défaillant.

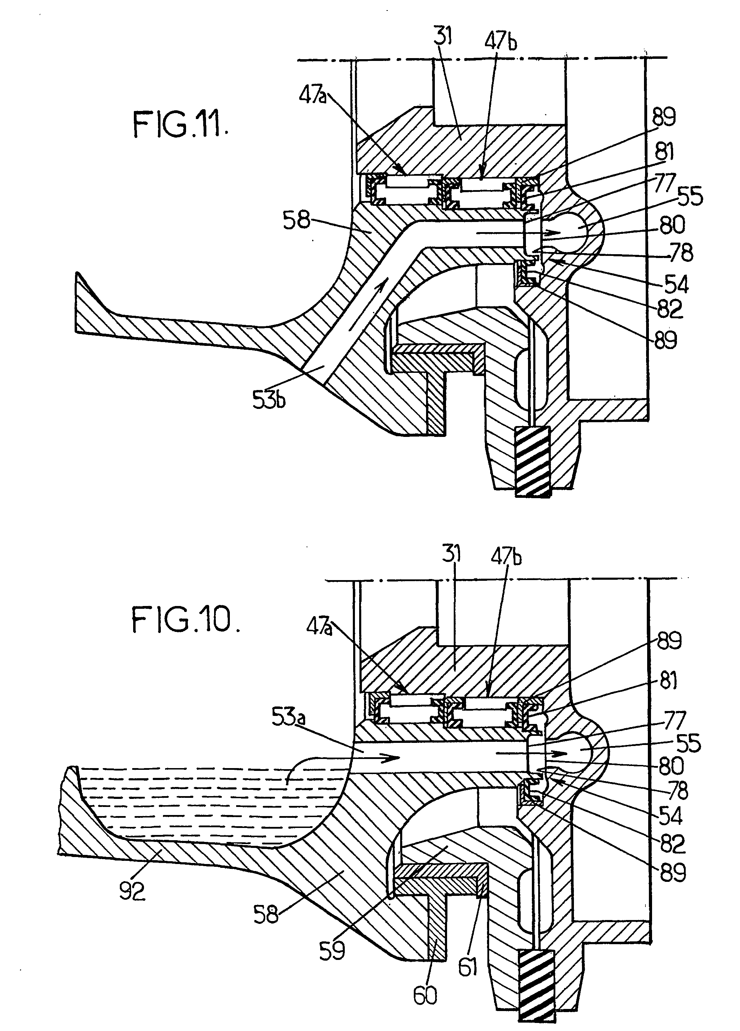

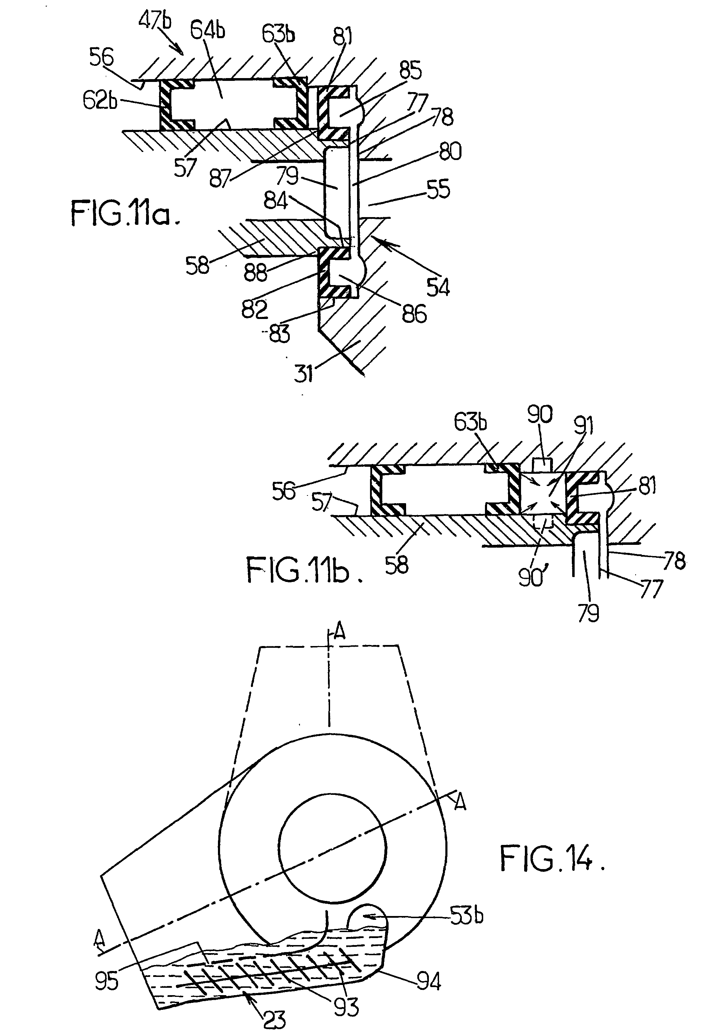

Concernant l'unique circuit de vidange 52 (en bas de la figure 8), son palier de transfert 54 de lubrifiant du carter basculant 23 au conduit 55 de retour au réservoir 36, est un palier de transfert facial entre deux faces radiales 77 et 78 (par rapport à l'axe de basculement B-B) qui sont des faces annulaires sensiblement coaxiales autour de l'axe de basculement B-B et en vis-à-vis, l'une étant une face radiale pivotante 77 ménagée sur la partie pivotante 58, et l'autre étant une face radiale fixe 78 ménagée sur la partie fixe 31 (voir les figures 10, 11 et 11 a).

La représentation schématique de la figure 11a montre qu'une lumière faciale 79, en arc-de-cercle centré sur l'axe de basculement B-B et s'étendant sur un secteur angulaire d'environ 110° correspondant à l'angle maximum de basculement du carter basculant 23, est ménagée dans la face radiale pivotante 77 et alimentée en lubrifiant liquide collecté dans le fond de carter 24 de la manière décrite ci-après. Cette lumière faciale 79 est toujours, quelle que soit la position du carter basculant 23, en face d'un orifice de vidange 80 ménagé dans la face radiale fixe 78, à l'extrémité amont du conduit de retour 55 intégré dans la partie fixe 31 et menant au réservoir 36.

Cet orifice de vidange 80, visible sur la figure 13, est d'une section de passage supérieure à celle des orifices d'entrée 70a, 70b ou de sortie 71 a, 71 b des paliers de transfert radial 47a, 47b pour faciliter l'écoulement à une vitesse suffisante du lubrifiant liquide recyclé vers le réservoir 36, et pour ne pas créer de perte de charge significative.

Le palier de transfert facial 54 bénéficie d'une étanchéité radiale assurée à l'aide de deux autres joints d'étanchéité annulaires 81 et 82, coaxiaux autour de l'axe de basculement B-B et de même nature que les joints d'étanchéité des paliers de transfert radial 47a et 47b, c'est-à-dire de section transversale en U couché. L'un 81 de ces deux joints s'étend radialement à l'intérieur de la lumière faciale 79, et l'autre joint 82 s'étend radialement à l'extérieur de cette lumière faciale 79. Chacun des joints 81 et 82 est disposé de sorte que sa concavité soit tournée vers la pièce fixe 31, et le joint 81 est monté entre deux portions radialement en regard l'une de l'autre des deux portées cylindriques coaxiales fixe 56 et pivotante 57, entre lesquelles sont montés les joints d'étanchéité 62a, 63a, et 62b, 63b de chacun des deux paliers de transfert radial 47a et 47b.

De manière sensiblement analogue, l'autre joint 82, en position radiale externe, est monté entre deux portées cylindriques 83 et 84, sensiblement coaxiales autour de l'axe de basculement B-B, et dont l'une 84 est une portée pivotante ménagée sur la pièce pivotante 58 et limitant la face radiale pivotante 77 radialement vers l'extérieur, tandis que l'autre portée cylindrique 83 est une portée fixe ménagée sur la pièce fixe 31.

Ainsi, comme représenté schématiquement sur la figure 11a, chaque joint 81 et 82 délimite avec la pièce fixe 31 une chambre annulaire 85 ou 86 d'étanchéité radiale, qui est en communication avec la lumière faciale 79 et l'orifice de vidange 80 par le jeu axial entre les deux faces radiales 77 et 78, de sorte que chaque chambre 85 ou 86 est remplie de lubrifiant liquide sous une pression suffisante pour appliquer chacune des deux lèvres latérales de chacun des joints 81 et 82 radialement vers l'extérieur ou l'intérieur contre l'une respectivement des portées cylindriques fixes 56 ou 83 ou pivotantes 57 ou 84. Cette application radiale des lèvres des joints 81 et 82 contre les portées cylindriques 56, 57 et 83, 84 sous l'effet de la pression à l'intérieur des chambres 85 et 86 assure une bonne étanchéité radiale au palier de transfert facial 54, la retenue axiale des joints 81 et 82 entre les deux portées cylindriques correspondantes étant également assurée, comme dans le cas des joints d'étanchéité des paliers de transfert radial 47a et 47b, par des épaulements radiaux tels que 87 et 88 sur les portées pivotantes 57 et 84 sur la figure 11 a, ou par des bagues épaulées telles que 89 sur les figures 10 et 11, ces bagues épaulées 89 étant analogues à celle 65 de la figure 9a et également fixées sur la partie fixe 31.

Dans le mode de réalisation schématisé sur la figure 11 b, dans lequel les joints d'étanchéité 81 et 63b, respectivement du palier de transfert facial 54 et du palier de transfert radial 47b, ne sont pas directement dos-à-dos ni séparés uniquement par une bague épaulée, telle que 89, de retenue axiale de l'un au moins des joints, un détecteur de fuite 90, du type capteur de pression comme le détecteur de fuite 75 de la figure 9c, peut être implanté dans la portion de la portée fixe 56 qui s'étend entre ces deux joints 81 et 63b, ce détecteur 90 étant sensible à la présence de lubrifiant liquide sous pression dans le volume 91 délimité entre ces deux joints. En variante, le détecteur de fuite peut être implanté en 90' dans la portion de la porté pivotante 57 délimitant ce volume 91 sur la partie pivotante 58.

La lumière faciale 79 du palier de transfert facial 54, décrite ci-dessus comme étant alimentée par un canal de vidange 53 en lubrifiant liquide collecté dans le carter basculant 23, est en fait alimentée par l'un et/ou l'autre de deux canaux de vidange 53a et 53b, dont chacun est efficace dans l'une respectivement des deux positions extrêmes de basculement du carter basculant 23 par rapport au support fixe 30.

En mode hélicoptère (figure 4), le lubrifiant ayant été projeté sur des organes lubrifiés dans le carter basculant 23 est collecté par gravité, comme représenté sur la figure 10, dans un bac collecteur 92 porté par la partie pivotante 58 dans le fond de carter 24, et le lubrifiant s'écoule par gravité et par le canal de vidange 53a percé dans la partie pivotante 58 jusqu'à déboucher dans la lumière faciale 79, et donc entre les deux faces radiales 77 et 78 de ce palier de transfert facial 54.

Par contre, en mode avion (figure 5) le lubrifiant liquide collecté dans au moins une zone inférieure du carter 23 est pressurisé, par un organe de mise en pression pouvant être une pompe de vidange, entraînée en rotation dans le fond de carter 24 à partir de l'un des pignons ou roues dentées de la transmission qui est logé(e) dans ce carter 23, par exemple un pignon auxiliaire en prise avec la roue dentée 15 et dont l'arbre entraîne directement ou indirectement cette pompe de vidange. Le lubrifiant liquide collecté et pressurisé dans le fond de carter 24 est alors conduit dans la lumière faciale 79 par un second canal de vidange 53b ménagé dans la pièce pivotante 58, comme schématiquement représenté sur la figure 11.

En variante, deux pompes de vidange peuvent être entraînées dans le fond de carter 24, et disposées de sorte que l'une prélève du lubrifiant lorsque le carter basculant 23 est en mode avion, et l'autre lorsque le carter 23 est en mode hélicoptère.

Cette ou ces pompe(s) de vidange peut ou peuvent transférer le lubrifiant collecté dans le fond de carter 24 au palier de transfert facial 54 par un nombre approprié de canaux de vidange tels que 53a et 53b.

Mais, afin de remédier aux inconvénients liés à l'utilisation d'au moins une pompe de vidange dans le carter basculant 23 l'organe de mise en pression du lubrifiant collecté dans le fond de carter 24 en mode avion est de préférence, comme proposé dans le brevet français précité, une vis d'Archimède, telle que schématiquement représentée sur la figure 14, correspondant sensiblement à la figure 1 de ce brevet français. Cette vis d'Archimède 93 est entraînée en rotation, par une prise de mouvement sur un des pignons ou roue dentée dans le carter basculant 23, dans une goulotte 94 qui s'étend à l'intérieur et le long de la paroi du carter 23, et en particulier qui apparaît en saillie vers l'extérieur du fond de carter 24, dans une direction contenue dans un plan passant par l'axe de rotation A-A, et dans la partie la plus basse du fond de carter 24 lorsque le carter 23 est basculé en mode avion. Cette goulotte 94 partiellement en saillie vers l'extérieur du fond de carter 24 est représentée sur les figures 4, 6 et 7 également. L'intérieur de cette goulotte 94 communique, par différents orifices 95, ménagés à différents niveaux sur la longueur de la goulotte 94, avec l'intérieur du carter 23, afin de collecter le lubrifiant liquide s'écoulant dans le carter 23 basculé. Ce lubrifiant collecté est déplacé par la vis d'Archimède 93, sous une pression suffisante, jusqu'à l'entrée du deuxième canal de vidange 53b, dans une zone de transfert permettant d'alimenter la lumière faciale 79 et le joint de transfert facial 54 en lubrifiant liquide récupéré dans le carter 23 en mode avion.

On obtient ainsi une installation de lubrification dont la masse et l'encombrement sont réduits, d'une grande fiabilité et d'une maintenance simplifiées.

## Revendications

1. Installation de lubrification pour une boîte de transmission de puissance basculante (13-17), destinée à entraîner en rotation au moins un organe mené (22) autour d'un axe de rotation (A-A) devant lui-même pivoter autour d'un axe de basculement (B-B), sensiblement perpendiculaire audit axe de rotation (A-A) dudit organe mené (22), tel qu'un rotor basculant d'aéronef convertible ou de ballon dirigeable, ladite boîte de transmission comprenant un carter (23) monté basculant autour dudit axe de basculement (B-B) sur un support rigide non basculant (30),
**caractérisée en ce qu'**elle comprend au moins un circuit de lubrification (37a, 37b) sous pression pour la lubrification d'au moins un organe à lubrifier, tel que pignon, palier, roulement et/ou cannelures, logé dans le carter basculant (23), ledit circuit de lubrification comportant un palier de transfert radial (47a, 47b) de lubrifiant liquide sous pression, entre deux portées cylindriques (56, 57) en vis-à-vis, sensiblement coaxiales autour de l'axe de basculement (B-B), et dont l'une est une portée fixe (56), ménagée sur une partie fixe (31), ladite partie fixe pouvant être rendue solidaire dudit support non basculant (30), et l'autre est une portée pivotante (57), ménagée sur une partie pivotante (58), ladite partie pivotante pouvant être rendue solidaire du carter pivotant (23), ledit palier de transfert radial (47a, 47b) comportant deux joints d'étanchéité annulaires (62a, 63a ; 62b, 63b) de section transversale en U couché, à concavité de chacun tournée vers l'autre et espacés l'un de l'autre selon l'axe de basculement (B-B), de sorte à délimiter entre les deux joints (62a, 63a ; 62b, 63b) et les deux portées (56, 57) une chambre annulaire (64a, 64b) de lubrifiant liquide sous pression, dont la pression applique chacune des deux lèvres latérales de chaque joint d'étanchéité radialement vers l'intérieur ou l'extérieur vers et/ou contre l'une respectivement des deux portées (56, 57), ladite chambre annulaire (64a, 64b), d'une part, étant alimentée en lubrifiant liquide sous pression par un orifice d'entrée (70a, 70b), débouchant dans la portée fixe (56) entre les deux joints d'étanchéité (62a, 63a ; 62b, 63b), et à l'extrémité aval d'au moins un conduit d'alimentation (46a, 46b) intégré dans ladite partie fixe (31) et dont l'extrémité amont est reliée à au moins une source (34a, 34b) de lubrifiant pressurisé, et, d'autre part, étant capable d'alimenter le carter basculant (23) en lubrifiant liquide sous pression par un orifice de sortie (71 a, 71 b), débouchant dans la portée pivotante (57) entre les deux joints d'étanchéité (62a, 63a ; 62b, 63b), et à l'extrémité amont d'au moins une conduite de distribution (48a, 48b) s'étendant dans la partie pivotante (58) et apte à déboucher dans le carter basculant (23).

2. Installation selon la revendication 1, **caractérisée en ce que** l'un au moins des orifices d'entrée (70a, 70b) et de sortie (71 a, 71 b) débouche dans une lumière (69a, 69b) en arc-de-cercle, centrée sur l'axe de basculement (B-B), ménagée entre les deux joints d'étanchéité (62a, 63a ; 62b, 63b) dans la portée fixe (56) ou pivotante (57) correspondante, et sous-tendue par un angle au centre correspondant sensiblement à l'angle de pivotement dudit carter basculant (23).

3. Installation selon l'une quelconque des revendications 1 et 2, **caractérisée en ce que** chacun des deux joints d'étanchéité (62a, 63a ; 62b, 63b) du palier de transfert radial (47a, 47b) est retenu axialement entre les deux portées (56, 57) et contre la pression dans ladite chambre annulaire (64a, 64b) par un épaulement radial (66, 67) ménagé sur l'une des deux portées (56, 57) ou par une bague épaulée (65) fixée à l'une des deux portées (56, 57), de préférence à la portée fixe (56).

4. Installation selon l'une quelconque des revendications 1 à 3, **caractérisée en ce qu'**elle comprend également un circuit de vidange (52), assurant le retour du lubrifiant liquide du carter basculant (23) dans la pièce fixe (31) par un palier de transfert facial (54) du lubrifiant liquide entre deux faces radiales (77, 78), par rapport à l'axe de basculement (B-B), en vis-à-vis et dont l'une est une face pivotante (77) ménagée sur la partie pivotante (58) et l'autre est une face fixe (78), ménagée sur ladite partie fixe (31 ), au moins un canal de vidange (53a, 53b), ménagé dans ladite partie pivotante (58), débouchant dans une lumière faciale (79) en arc-de-cercle centrée sur l'axe de basculement (B-B) et ménagée dans ladite face radiale pivotante (77), en regard d'un orifice de vidange (80) débouchant dans ladite face radiale fixe (78), et à l'extrémité amont d'un conduit de retour (55) intégré dans ladite partie fixe (31 ), pour conduire le lubrifiant liquide dans un réservoir (36).

5. Installation selon la revendication 4, **caractérisée en ce que** ladite lumière faciale (79) s'étend dans ladite face radiale pivotante (77) entre deux autres joints d'étanchéité annulaires (81, 82), sensiblement coaxiaux autour dudit axe de basculement (B-B) et situés radialement l'un (82) à l'extérieur et l'autre (81) à l'intérieur de ladite lumière faciale (79), chacun des deux autres joints d'étanchéité (81, 82) ayant une section transversale en U couché à concavité tournée vers ladite pièce fixe (31 ), et étant monté entre deux portées cylindriques (56, 57 ; 83, 84) sensiblement coaxiales autour de l'axe de basculement (B-B) et dont l'une est une portée pivotante (57, 84) ménagée sur ladite pièce pivotante (58), et l'autre une portée fixe (56, 83) ménagée sur ladite pièce fixe (31), de sorte que chaque autre joint d'étanchéité (81, 82) délimite avec ladite pièce fixe (31) une chambre annulaire (85, 86) d'étanchéité radiale en communication, entre les deux faces radiales (77, 78), avec la lumière faciale (79) et l'orifice de vidange (80), et remplie de lubrifiant liquide appliquant chacune des deux lèvres latérales dudit autre joint d'étanchéité (81, 82) radialement vers l'extérieur ou l'intérieur contre l'une respectivement desdites portées cylindriques fixe (56, 83) ou pivotante (57, 84).

6. Installation selon la revendication 5, **caractérisée en ce qu'**elle comporte au moins un détecteur de fuite (90, 90'), sensible à une présence de lubrifiant liquide dans un volume (91) délimité entre un joint d'étanchéité (81) associé au palier de transfert facial (54) et un joint d'étanchéité (63b) du palier de transfert radial (47b) d'un circuit de lubrification (27b), les deux joints d'étanchéité (81, 63b) étant montés entre les mêmes portées cylindriques (56, 57).

7. Installation selon l'une quelconque des revendications 4 à 6, **caractérisée en ce que** le circuit de vidange (52) comprend un premier canal de vidange (53a), débouchant en aval dans ladite lumière faciale (79), et, en amont, dans un fond (24) dudit carter basculant (23) dans lequel le lubrifiant liquide est collecté par gravité dans au moins une première position dudit carter basculant (23) autour de l'axe de basculement (B-B), et un deuxième canal de vidange (53b), débouchant dans ladite lumière faciale (79) par son extrémité aval et canalisant du lubrifiant liquide pressurisé par au moins un organe (93) de mise en pression du lubrifiant collecté dans au moins une partie dudit carter basculant (23), dans au moins une deuxième position du carter basculant (23) autour de l'axe de basculement (B-B).

8. Installation selon la revendication 7, **caractérisée en ce que** ledit organe (93) de mise en pression dudit lubrifiant liquide collecté dans ledit carter basculant (23) est une pompe de vidange, entraînée en rotation dans une partie dudit carter basculant (23) dans laquelle du lubrifiant liquide est collecté dans au moins ladite deuxième position dudit carter basculant (23) autour dudit axe de basculement (B-B), ladite pompe de vidange alimentant ledit second canal de vidange (53b).

9. Installation selon la revendication 7, **caractérisée en ce que** ledit organe de mise en pression du lubrifiant liquide est une vis d'Archimède (93), entraînée en rotation dans une goulotte (94) s'étendant à l'intérieur et le long d'une paroi dudit carter basculant (23), ladite goulotte (94) étant percée d'orifices (95) de collecte du lubrifiant liquide à différents niveaux dans ledit carter basculant (23), dans au moins ladite deuxième position de ce dernier autour de l'axe de basculement (B-B), ladite vis d'Archimède (93) alimentant ledit second canal de vidange (53b).

10. Installation selon l'une quelconque des revendications 1 à 9 précédentes, **caractérisée en ce qu'**elle comprend deux circuits de lubrification, dont un circuit principal (37a) et un circuit de secours (37b), tels que leurs paliers de transfert radial (47a, 47b), sensiblement de même rayon autour de l'axe de basculement (B-B), sont décalés l'un par rapport à l'autre selon l'axe de basculement (B-B) et en direction circonférentielle autour de l'axe de basculement (B-B) pour ce qui concerne leurs orifices d'entrée (70a, 70b) et de sortie (71 a, 71 b) et, le cas échéant, leur lumière en arc-de-cercle (69a, 69b), et **en ce que** la vidange (52) du lubrifiant liquide est assurée par un circuit de vidange commun aux deux circuits de lubrification (37a, 37b).

11. Installation selon la revendication 10, **caractérisée en ce qu'**elle comporte au moins un détecteur de fuite (75), sensible à une présence de lubrifiant liquide (47a, 47b) dans le volume délimité entre les paliers de transfert radial des deux circuits de lubrification (37a, 37b), lesdits paliers de transfert radial (47a, 47b) étant axialement décalés entre les mêmes portées cylindriques fixe (56) et pivotante (57).

12. Installation selon l'une quelconque des revendications 10 et 11, **caractérisée en ce que** ledit au moins un conduit d'alimentation (46a, 46b), intégré dans ladite partie fixe (31 ) de chacun des circuits de lubrification (37a, 37b), est alimenté à partir d'un réservoir (36) de lubrifiant liquide dans lequel est immergée au moins une pompe de lubrification (34a, 34b) pour chaque circuit de lubrification (37a, 37b).

13. Installation selon la revendication 12, **caractérisée en ce que** chaque pompe de lubrification (34a, 34b) est entraînée par un pignon (11) d'un premier ensemble réducteur (1-5) logé au moins en partie dans un carter non basculant (32) solidaire dudit support (30), ledit premier ensemble réducteur (1-5) étant en prise, par un pignon (8) monté en rotation autour dudit axe de basculement (B-B), avec un second ensemble réducteur (13-17) logé dans ledit carter basculant (23) et pivotant avec ce dernier.

14. Installation selon l'une quelconque des revendications 1 à 13, **caractérisée en ce que**, dans ledit carter basculant (23), chaque circuit de lubrification (37a, 37b) comporte au moins un canal annulaire de distribution (49a, 49b), sensiblement centré sur ledit axe de rotation (A-A) de l'organe mené (22), et relié à ladite chambre annulaire (64a, 64b) du palier de transfert radial (47a, 47b) correspondant par ladite conduite de distribution (48a, 48b).

15. Installation selon la revendication 14, **caractérisée en ce que** ledit canal annulaire de distribution (49a, 49b) est ménagé dans un diaphragme (72) sensiblement transversal audit carter basculant (23) et supportant au moins un roulement de guidage (29) d'au moins un arbre (16) d'au moins un pignon (15, 18) du second ensemble réducteur (13-17) et/ou dudit organe mené (22) en rotation, chaque canal annulaire de distribution (49a, 49b) alimentant en lubrifiant liquide des conduites de lubrification (50a, 50b) se terminant par des jets de lubrifiant (51 a, 51 b) orientés vers des organes à lubrifier (14, 15, 16, 18, 19, 20, 21, 25-29) dans ledit carter basculant (23).

16. Aéronef convertible, comprenant au moins un rotor basculant (R) destiné à être entraîné en rotation autour d'un axe de rotation (A-A), devant lui-même pivoter autour d'un axe de basculement (B-B), par au moins une boîte de transmission de puissance basculante (13-17), comprenant un carter (23) monté basculant autour dudit axe de basculement (B-B), qui est sensiblement perpendiculaire audit axe de rotation (A-A), sur au moins un support rigide non-basculant (30) solidaire de la structure dudit aéronef, ledit carter (23) logeant au moins un organe à lubrifier, tel que pignons, paliers, roulements et/ou cannelures, **caractérisé en ce qu'**il comporte au moins une installation de lubrification de ladite au moins une boîte de transmission de puissance basculante, et **en ce que** ladite installation de lubrification est une installation selon l'une quelconque des revendications 1 à 15.

## Patentansprüche

1. Schmieranlage für ein kippendes Leistungsgetriebe (13-17), das dazu bestimmt ist, mindestens ein geführtes Organ (22) um eine Drehachse (A-A) in Drehung zu versetzen, die selbst um eine Kippachse (B-B) schwenken soll, die im wesentlichen senkrecht zur Drehachse (A-A) des geführten Organs (22), wie z.B. eines Kipprotors eines umrüstbaren Luftfahrzeugs oder eines steuerbaren Ballons, liegt, wobei das Getriebe ein Gehäuse (23) aufweist, das um die Kippachse (B-B) kippend auf einen nicht kippenden, steifen Träger (30) montiert ist,
**dadurch gekennzeichnet, dass** sie mindestens einen unter Druck stehenden Schmierkreislauf (37a, 37b) zum Schmieren mindestens eines zu schmierenden Organs, wie zum Beispiel Zahnrad, Lager, Wälzlager und/oder Rillen, aufweist, das im kippenden Gehäuse (23) angeordnet ist, wobei der Schmierkreislauf ein radiales Übertragungslager (47a, 47b) für unter Druck stehendes flüssiges Schmiermittel zwischen zwei einander gegenüberliegenden, um die Kippachse (B-B) im Wesentlichen koaxialen zylindrischen Auflageflächen (56, 57) aufweist, von denen eine eine ortsfeste Auflagefläche (56) ist, die auf einem ortsfesten Teil (31) ausgebildet ist, wobei das ortsfeste Teil fest mit dem nicht kippenden Träger (30) verbunden werden kann, und die andere eine kippende Auflagefläche (57) ist, die auf einem kippenden Teil (58) ausgebildet ist, wobei das kippende Teil fest mit dem kippenden Gehäuse (23) verbunden werden kann, wobei das radiale Übertragungslager (47a, 47b) zwei Ringdichtungen (62a, 63a; 62b, 63b) mit dem Querschnitt eines liegenden U aufweist, deren konkave Ausbildungen einander gegenüberliegen und die gemäß der Kippachse (B-B) einen Abstand voneinander aufweisen, um zwischen den beiden Dichtungen (62a, 63a; 62b, 63b) und den beiden Auflageflächen (56, 57) eine Ringkammer (64a, 64b) für unter Druck stehendes Schmiermittel zu bilden, dessen Druck jede der beiden Seitenlippen jeder Dichtung radial nach innen oder nach außen zu einer und/ oder gegen eine der beiden Auflageflächen (56, 57) drückt, wobei die Ringkammer (64a, 64b) einerseits über eine Eingangsöffnung (70a, 70b) mit flüssigem, unter Druck stehendem Schmiermittel gespeist wird, die in der ortsfesten Auflagefläche (56) zwischen den beiden Dichtungen (62a, 63a; 62b, 63b), und am stromabwärts hinten liegenden Ende mindestens eines Speisekanals (46a, 46b) mündet, der in das ortsfeste Teil (31) integriert ist und dessen stromaufwärts vorne liegendes Ende mit mindestens einer Quelle (34a, 34b) von unter Druck stehendem Schmiermittel verbunden ist, und andererseits in der Lage ist, das kippende Gehäuse (23) mit unter Druck stehendem flüssigem Schmiermittel über eine Ausgangsöffnung (71a, 71b) zu speisen, die in der schwenkenden Auflagefläche (57) zwischen den beiden Dichtungen (62a, 63a; 62b, 63b) und am stromaufwärts vorne liegenden Ende mindestens einer Ausgabeleitung (48a, 48b) mündet, die sich im schwenkenden Teil (58) erstreckt und im kippenden Gehäuse (23) münden kann.

2. Anlage nach Anspruch 1, **dadurch gekennzeichnet, dass** mindestens eine der Eingangs- (70a, 70b) und Ausgangsöffnungen (71a, 71b) in einem kreisbogenförmigen Schlitzloch (69a, 69b) mündet, das auf die Kippachse (B-B) zentriert und zwischen den beiden Dichtungen (62a, 63a; 62b, 63b) in der entsprechenden ortsfesten (56) bzw. kippenden Auflagefläche (57) ausgebildet ist und von einem Winkel in der Mitte begrenzt wird, der im Wesentlichen dem Schwenkwinkel des kippenden Gehäuses (23) entspricht.

3. Anlage nach einem der Ansprüche 1 und 2, **dadurch gekennzeichnet, dass** jede der beiden Dichtungen (62a, 63a; 62b, 63b) des radialen Übertragungslagers (47a, 47b) axial zwischen den beiden Auflageflächen (56, 57) und gegen den Druck in der Ringkammer (64a, 64b) durch eine radiale Schulter (66, 67), die auf einer der beiden Auflageflächen (56, 57) ausgebildet ist, oder durch einen mit Schulter versehenen Ring (65) gehalten wird, der an einer der beiden Auflageflächen (56, 57) befestigt ist, vorzugsweise an der ortsfesten Auflagefläche (56).

4. Anlage nach einem der Ansprüche 1 bis 3, **dadurch gekennzeichnet, dass** sie weiter einen Ablasskreislauf (52) aufweist, der die Rückkehr des flüssigen Schmiermittels vom kippenden Gehäuse (23) in das ortsfeste Teil (31) über ein axiales Übertragungslager (54) für das flüssige Schmiermittel zwischen zwei bezüglich der Kippachse (B-B) radialen Flächen (77, 78), die einander gegenüberliegen und von denen eine eine schwenkende Fläche (77), die auf dem schwenkenden Teil (58) ausgebildet ist, und die andere eine ortsfeste Fläche (78) ist, die auf dem ortsfesten Teil (31) ausgebildet ist, gewährleistet, wobei mindestens ein im schwenkbaren Teil (58) ausgebildeter Ablasskanal (53a, 53b) in ein axiales kreisbogenförmiges Schlitzloch (79), das auf die Kippachse (B-B) zentriert und in der schwenkenden radialen Fläche (77) gegenüber einer in die ortsfeste radiale Fläche (78) mündenden Ablassöffnung (80) ausgebildet ist, und am stromaufwärts vorne liegenden Ende eines Rückführkanals (55) mündet, der in den ortsfesten Teil (31) integriert ist, um das flüssige Schmiermittel in einen Tank (36) zu leiten.

5. Anlage nach Anspruch 4, **dadurch gekennzeichnet, dass** das axiale Schlitzloch (79) sich in der schwenkenden radialen Fläche (77) zwischen zwei weiteren ringförmigen Dichtungen (81, 82) erstreckt, die um die Kippachse (B-B) herum im wesentlichen koaxial sind und sich radial eine außerhalb (82) und die andere innerhalb (81) des axialen Schlitzlochs (79) befinden, wobei jede der beiden weiteren Dichtungen (81, 82) einen Querschnitt in Form eines liegenden U aufweist, dessen konkave Ausbildung zum ortsfesten Teil (31) weist, und zwischen zwei zylindrischen Auflageflächen (56, 57; 83, 84) montiert ist, die um die Kippachse (B-B) im wesentlichen koaxial sind und von denen eine eine kippende Auflagefläche (57, 84), die auf dem kippenden Teil (58) ausgebildet ist, und die andere eine ortsfeste Auflagefläche (56, 83) ist, die auf dem ortsfesten Teil (31) ausgebildet ist, so dass jede weitere Dichtung (81, 82) mit dem ortsfesten Teil (31) eine Ringkammer (85, 86) mit radialer Dichtheit begrenzt, die zwischen den beiden radialen Flächen (77, 78) mit dem axialen Schlitzloch (79) und der Ablassöffnung (80) in Verbindung steht und mit flüssigem Schmiermittel gefüllt ist, das jede der beiden seitlichen Lippen der weiteren Dichtung (81, 82) radial nach außen oder innen gegen eine der ortsfesten (56, 83) bzw. kippenden (57, 84) zylindrischen Auflageflächen drückt.

6. Anlage nach Anspruch 5, **dadurch gekennzeichnet, dass** sie mindestens einen Leckdetektor (90, 90') aufweist, der für ein Vorhandensein von flüssigem Schmiermittel in einem Raum (91) empfindlich ist, der von einer Dichtung (81), die dem axialen Übertragungslager (54) zugeordnet ist, und einer Dichtung (63b) des radialen Übertragungslagers (47b) eines Schmierkreislaufs (27b) begrenzt wird, wobei die beiden Dichtungen (81, 63b) zwischen den gleichen zylindrischen Auflageflächen (56, 57) montiert sind.

7. Anlage nach einem der Ansprüche 4 bis 6, **dadurch gekennzeichnet, dass** der Ablasskreislauf (52) einen ersten Ablasskanal (53a), der stromabwärts hinten in das axiale Schlitzloch (79) und stromaufwärts vorne in einen Boden (24) des kippenden Gehäuses (23) mündet, in dem das flüssige Schmiermittel durch Schwerkraft in mindestens einer ersten Stellung des kippenden Gehäuses (23) um die Kippachse (B-B) gesammelt wird, und einen zweiten Ablasskanal (53b) aufweist, der mit seinem stromabwärts hinten liegenden Ende in das axiale Schlitzloch (79) mündet und von mindestens einem Organ (93) zum Unterdrucksetzen des Schmiermittels unter Druck gesetztes flüssiges Schmiermittel, das in mindestens einem Teil des kippenden Gehäuses (23) gesammelt wird, in mindestens einer zweiten Stellung des kippenden Gehäuses (23) um die Kippachse (B-B) kanalisiert.

8. Anlage nach Anspruch 7, **dadurch gekennzeichnet, dass** das Organ (93) zum Unterdrucksetzen des im kippenden Gehäuse (23) gesammelten flüssigen Schmiermittels eine Ablasspumpe ist, die in einem Teil des kippenden Gehäuses (23) in Drehung versetzt wird, in dem flüssiges Schmiermittel mindestens in der zweiten Stellung des kippenden Gehäuses (23) um die Kippachse (B-B) gesammelt wird, wobei die Ablasspumpe den zweiten Ablasskanal (53b) speist.

9. Anlage nach Anspruch 7, **dadurch gekennzeichnet, dass** das Organ zum Unterdrucksetzen des flüssigen Schmiermittels ein Schneckenförderer (93) ist, der in einer Rinne (94) in Drehung versetzt wird, die sich im Inneren und entlang einer Wand des kippenden Gehäuses (23) erstreckt, wobei die Rinne (94) Öffnungen (95) zum Sammeln des flüssigen Schmiermittels auf verschiedenen Höhen im kippenden Gehäuse (23) in mindestens der zweiten Stellung dieses letzteren um die Kippachse (B-B) aufweist, wobei der Schneckenförderer (93) den zweiten Ablasskanal (53b) speist.

10. Anlage nach einem der Ansprüche 1 bis 9, **dadurch gekennzeichnet, dass** sie zwei Schmierkreisläufe aufweist, einen Hauptkreislauf (37a) und einen Hilfskreislauf (37b), derart, dass ihre radialen Übertragungslager (47a, 47b), die im Wesentlichen den gleichen Radius um die Kippachse (B-B) aufweisen, voneinander bezüglich der Kippachse (B-B) und in Umfangsrichtung um die Kippachse (B-B) herum einen Abstand betreffend ihre Eingangsöffnungen (70a, 70b) und Ausgangsöffnungen (71a, 71b) und ggf. ihr kreisbogenförmiges Schlitzloch (69a, 69b) aufweisen, und dass der Ablass (52) des flüssigen Schmiermittels über einen den beiden Schmierkreisläufen (37a, 37b) gemeinsamen Ablasskreislauf erfolgt.

11. Anlage nach Anspruch 10, **dadurch gekennzeichnet, dass** sie mindestens einen Leckdetektor (75) aufweist, der für das Vorhandensein von flüssigem Schmiermittel in dem Raum empfindlich ist, der von den radialen Übertragungslagern (47a, 47b) der beiden Schmierkreisläufe (37a, 37b) begrenzt wird, wobei die radialen Übertragungslager (47a, 47b) axial zwischen den gleichen zylindrischen ortsfesten (56) und schwenkenden Auflageflächen (57) verschoben sind.

12. Anlage nach einem der Ansprüche 10 und 11, **dadurch gekennzeichnet, dass** der mindestens eine Speisekanal (46a, 46b), der in den ortsfesten Teil (31) jedes der Schmierkreisläufe (37a, 37b) integriert ist, ausgehend von einem Tank (36) für flüssiges Schmiermittel gespeist wird, in den mindestens eine Schmierpumpe (34a, 34b) für jeden Schmierkreislauf (37a, 37b) eingetaucht ist.

13. Anlage nach Anspruch 12, **dadurch gekennzeichnet, dass** jede Schmierpumpe (34a, 34b) von einem Zahnrad (11) eines ersten Untersetzungsgetriebes (1-5) angetrieben wird, das mindestens zum Teil in einem nicht kippenden Gehäuse (32) angeordnet ist, das mit dem Träger (30) fest verbunden ist, wobei das erste Untersetzungsgetriebe (1-5) über ein um die Kippachse (B-B) drehend montiertes Zahnrad (8) mit einem zweiten Untersetzungsgetriebe (13-17) in Eingriff steht, das im kippenden Gehäuse (23) montiert ist und mit diesem schwenkt.

14. Anlage nach einem der Ansprüche 1 bis 13, **dadurch gekennzeichnet, dass** im kippenden Gehäuse (23) jeder Schmierkreislauf (37a, 37b) mindestens einen ringförmigen Ausgabekanal (49a, 49b) aufweist, der im Wesentlichen auf die Drehachse (A-A) des geführten Organs (22) zentriert und mit der Ringkammer (64a, 64b) des entsprechenden radialen Übertragungslagers (47a, 47b) über die Ausgabeleitung (48a, 48b) verbunden ist.

15. Anlage nach Anspruch 14, **dadurch gekennzeichnet, dass** der ringförmige Ausgabekanal (49a, 49b) in einer Membran (72) ausgebildet ist, die im wesentlichen quer zum kippenden Gehäuse (23) liegt und mindestens ein Führungswälzlager (29) mindestens einer Welle (16) mindestens eines Zahnrads (15, 18) des zweiten Untersetzungsgetriebes (13-17) und/oder des in Drehung geführten Organs (22) trägt, wobei jeder ringförmige Ausgabekanal (49a, 49b) Schmierleitungen (50a, 50b) mit Schmiermittel speist, die in Schmiermittelstrahlen (51 a, 51b) enden, die zu zu schmierenden Organen (14, 15, 16, 18, 19, 20, 21, 25-29) im kippenden Gehäuse (23) hin ausgerichtet sind.

16. Umrüstbares Luftfahrzeug, das mindestens einen Kipprotor (R) aufweist, der dazu bestimmt ist, um eine Drehachse (A-A), die selbst um eine Schwenkachse (B-B) kippen soll, von mindestens einem kippenden Leistungsgetriebe (13-17) in Drehung versetzt zu werden, das ein Gehäuse (23) aufweist, das um die Kippachse (B-B), die im Wesentlichen senkrecht zur Drehachse (A-A) liegt, auf mindestens einen nicht kippenden steifen Träger (30) kippend montiert ist, der fest mit der Struktur des Luftfahrzeugs verbunden ist, wobei sich im Gehäuse (23) mindestens ein zu schmierendes Organ, wie zum Beispiel Zahnräder, Lager, Wälzlager und/oder Rillen, befindet, **dadurch gekennzeichnet, dass** es mindestens eine Anlage zum Schmieren des mindestens einen kippenden Leistungsgetriebes aufweist und dass die Schmieranlage eine Anlage nach einem der Ansprüche 1 bis 15 ist.

## Claims

1. A lubricating installation for a tilting power transmission box (13 - 17), intended to drive at least one driven member (22) in rotation about an axis of rotation (A-A) which is itself to pivot about a tilting axis (B-B) substantially perpendicular to the said axis of rotation (A-A) of the said driven member (22), such as a tilting rotor of a convertible aircraft or a dirigible balloon, the said transmission box comprising a casing (23) which is mounted to tilt about the said tilting axis (B-B) on a rigid, non-tilting support (30),
**characterised in that** it comprises at least one pressurised lubricating circuit (37a, 37b) for the lubrication of at least one member to be lubricated, such as a pinion, bearing, roll and/or grooves, accommodated in the tilting casing (23), the said lubricating circuit having a bearing (47a, 47b) for the radial transfer of pressurised liquid lubricant between two cylindrical surfaces (56, 57) opposite one another and substantially coaxial with respect to the tilting axis (B-B), of which one is a fixed surface (56) made on a fixed part (31), it being possible for the said fixed part to be made in one piece with the said non-tilting support (30), and of which the other is a pivotal surface (57) made on a pivotal part (58), it being possible for the said pivotal part to be made in one piece with the pivotal casing (23), the said radial transfer bearing (47a, 47b) having two annular gaskets (62a, 63a; 62b, 63b) which are in the shape of a horizontal U in cross-section, with the open side of each one facing the other, and being spaced from one another along the tilting axis (B-B) such that there is delimited between the two gaskets (62a, 63a; 62b, 63b) and the two surfaces (56, 57) an annular chamber (64a, 64b) of pressurised liquid lubricant whereof the pressure applies each of the two side lips of each gasket radially inwards or outwards towards and/or in opposition to a respective one of the two surfaces (56, 57), the said annular chamber (64a, 64b) on the one hand being supplied with pressurised liquid lubricant from an inlet opening (70a, 70b) which opens into the fixed surface (56) between the two gaskets (62a, 63a; 62b, 63b), at the downstream end of at least one supply duct (46a, 46b) which is integrated in the said fixed part (31) and whereof the upstream end is connected to at least one source (34a, 34b) of pressurised lubricant, and on the other hand being capable of supplying the tilting casing (23) with pressurised liquid lubricant through an outlet opening (71a, 71b) which opens into the pivotal surface (57) between the two gaskets (62a, 63a; 62b, 63b), at the upstream end of at least one distribution duct (48a, 48b) extending in the pivotal part (58) and capable of opening into the tilting casing (23).

2. An installation according to Claim 1, **characterised in that** at least one of the inlet openings (70a, 70b) and outlet openings (71a, 71b) opens into an arcuate aperture (69a, 69b) centred on the tilting axis (B-B) and made between the two gaskets (62a, 63a; 62b, 63b) in the corresponding fixed surface (56) or pivotal surface (57) and subtended by an angle at the centre substantially corresponding to the angle of pivoting of the said tilting casing (23).

3. An installation according to either of Claims 1 or 2, **characterised in that** each of the two gaskets (62a, 63a; 62b, 63b) of the radial transfer bearing (47a, 47b) is held axially between the two surfaces (56, 57) and in opposition to the pressure in the said annular chamber (64a, 64b) by a radial shoulder (66, 67) made on one of the two surfaces (56, 57) or by a ring (65) having a shoulder and fixed to one of the two surfaces (56, 57), preferably the fixed surface (56).

4. An installation according to any one of Claims 1 to 3, **characterised in that** it also comprises a drainage circuit (52) ensuring that the liquid lubricant is returned from the tilting casing (23) to the fixed part (31) by a front transfer bearing (54) of the liquid lubricant between two radial faces (77, 78) in relation to the tilting axis (B-B), which are opposite one another and whereof one is a pivotal face (77) made on the pivotal part (58) and the other is a fixed face (78) made on the said fixed part (31), with at least one drainage channel (53a, 53b) made in the said pivotal part (58) opening into a front arcuate aperture (79) centred on the tilting axis (B-B) and made in the said pivotal radial face (77), opposite a drainage opening (80) which opens into the said fixed radial face (78), at the upstream end of a return duct (55) integrated in the said fixed part (31), to guide the liquid lubricant into a reservoir (36).

5. An installation according to Claim 4, **characterised in that** the said front aperture (79) extends in the said pivotal radial face (77) between two other annular gaskets (81, 82) which are substantially coaxial with respect to the said tilting axis (B-B) and located, in radial terms, one (82) on the outside and the other (81) on the inside of the said front aperture (79), each of the two other gaskets (81, 82) being in the shape of a horizontal U in cross-section, with the open side facing the said fixed part (31), and being mounted between two cylindrical surfaces (56, 57; 83, 84) which are substantially coaxial with respect to the tilting axis (B-B) and whereof one is a pivotal surface (57, 84) made on the said pivotal part (58) and the other is a fixed surface (56, 83) made on the said fixed part (31), such that each of the other gaskets (81, 82) delimits with the said fixed part (31) an annular sealing chamber (85, 86) which is radial and in communication, between the two radial faces (77, 78), with the front aperture (79) and the drainage opening (80) and fills each of the two side lips of the said other gasket (81, 82) with liquid lubricant radially outwards or inwards in opposition to a respective one of the said fixed and the said pivotal cylindrical surfaces (56, 83 or 57, 84).

6. An installation according to Claim 5, **characterised in that** it has at least one leak detector (90, 90') which senses the presence of liquid lubricant in a volume (91) delimited between a gasket (81) associated with the front transfer bearing (54) and a gasket (63b) of the radial transfer bearing (47b) of a lubricating circuit (27b), the two gaskets (81, 63b) being mounted between the same cylindrical surfaces (56, 57).

7. An installation according to any one of Claims 4 to 6, **characterised in that** the drainage circuit (52) has a first drainage channel (53a) opening downstream into the said front aperture (79) and upstream into a base (24) of the tilting casing (23) in which the liquid lubricant is collected by gravity in at least one first position of the said tilting casing (23) about the tilting axis (B-B) and a second drainage channel (53b) opening into the said front aperture (79) through its downstream end and channelling the pressurised liquid lubricant through at least one means (93) for pressurising the collected lubricant in at least one part of the said tilting casing (23) in at least one second position of the tilting casing (23) about the tilting axis (B-B).

8. An installation according to Claim 7, **characterised in that** the said means (93) for pressurising the said liquid lubricant collected in the said tilting casing (23) is a drainage pump which is driven in rotation in a part of the said tilting casing (23) in which liquid lubricant is collected in at least the said second position of the said tilting casing (23) about the said tilting axis (B-B), the said drainage pump supplying the second drainage channel (53b).

9. An installation according to Claim 7, **characterised in that** the said means for pressurising the liquid lubricant is an Archimedes screw (93) driven in rotation inside a run-off pipe (94) extending within and along a wall of the said tilting casing (23), the said run-off pipe (94) being pierced by openings (95) for collecting the liquid lubricant at different levels in the said tilting casing (23) in at least the said second position of the latter about the tilting axis (B-B), the said Archimedes screw (93) supplying the said second drainage channel (53b).

10. An installation according to any one of the preceding Claims 1 to 9,
**characterised in that** it comprises two lubricating circuits, namely a main circuit (37a) and an auxiliary circuit (37b), such that their radial transfer bearings (47a, 47b), which have substantially the same radius about the tilting axis (B-B), are offset from one another along the tilting axis (B-B) in the circumferential direction about the tilting axis (B-B) as regards their inlet openings (70a, 70b) and outlet openings (71 a, 71b) and where appropriate their arcuate aperture (69a, 69b), and **in that** drainage (52) of the liquid lubricant is ensured by a drainage circuit which is common to the two lubricating circuits (37a, 37b).

11. An installation according to Claim 10, **characterised in that** it has at least one leak detector (75) which senses the presence of liquid lubricant (47a, 47b) in the volume delimited between the radial transfer bearings of the two lubricating circuits (37a, 37b), the said radial transfer bearings (47a, 47b) being axially offset between the same fixed and pivotal cylindrical surfaces (56 and 57).

12. An installation according to either of Claims 10 and 11, **characterised in that** the said at least one supply duct (46a, 46b) integrated in the said fixed part (31) of each of the lubricating circuits (37a, 37b) is supplied from a reservoir (36) of liquid lubricant in which at least one lubricating pump (34a, 34b) for each lubricating circuit (37a, 37b) is immersed.

13. An installation according to Claim 12, **characterised in that** each lubricating pump (34a, 34b) is driven by a pinion (11) of a first reduction gear unit (1 - 5) accommodated at least partly in a non-tilting casing (32) which is in one piece with the said support (30), the said first reduction gear unit (1 - 5) being in engagement, through a pinion (8) mounted to rotate abut the said tilting axis (B-B), with a second reduction gear unit (13 - 17) accommodated in the said tilting casing (23) and pivoting with the latter.

14. An installation according to any one of Claims 1 to 13, **characterised in that** in the said tilting casing (23) each lubricating circuit (37a, 37b) has at last one annular distribution channel (49a, 49b) which is substantially centred on the said axis of rotation (A-A) of the driven member (22) and connected to the said annular chamber (64a, 64b) of the corresponding radial transfer bearing (47a, 47b) by the said distribution duct (48a, 48b).

15. An installation according to Claim 14, **characterised in that** the said annular distribution channel (49a, 49b) is made in a membrane (72) which is substantially transverse in relation to the said tilting casing (23) and supports at least one guiding roll (29) of at least one shaft (16) of at least one pinion (15, 18) of the second reduction gear unit (13 - 17) and/or the said member (22) driven in rotation, each annular distribution channel (49a, 49b) supplying liquid lubricant to lubricating ducts (50a, 50b) which end in lubricant nozzles (51a, 51b) oriented towards members (14, 15, 16, 18, 19, 20, 21, 25 - 29) to be lubricated in the said tilting casing (23).

16. A convertible aircraft, comprising at least one tilting rotor (R) intended to be driven in rotation about an axis of rotation (A-A) which is itself to pivot about a tilting axis (B-B) by at least one tilting power transmission box (13 - 17) comprising a casing (23) mounted to tilt about the said tilting axis (B-B), which is substantially perpendicular to the said axis of rotation (A-A), on at least one rigid, non-tilting support (30) which is in one piece with the structure of the said aircraft, the said casing (23) accommodating at least one member to be lubricated, such as pinions, bearings, rolls and/or grooves, **characterised in that** it has at least one lubricating installation of the said at least one tilting power transmission box, and **in that** the said lubricating installation is an installation according to any one of Claims 1 to 15.
